# EUROPEAN PATENT SPECIFICATION

(11) **EP 0 697 759 B1**
(45) Date of publication and mention of the grant of the patent: **08.03.2000**
(21) Application number: 95112048.4
(22) Date of filing: 01.08.1995
(51) Int. Cl.: H02K 7/116, B60K 7/00

(54) **Motor with gear reducer**
Motor mit Reduktionsgetriebe
Moteur avec engrenage réducteur

(30) Priority: 04.08.1994 JP 20282894; 04.08.1994 JP 20282994; 15.11.1994 JP 30556394; 09.12.1994 JP 33183794
(43) Date of publication of application: 21.02.1996
(73) Proprietor: HONDA GIKEN KOGYO KABUSHIKI KAISHA, Minato-ku Tokyo 107 (JP)
(72) Inventor: Toida, Naoya, Wako-shi, Saitama-ken (JP); Kotani,Yoshiaki, Wako-shi, Saitama-ken (JP); Hirose, Yoshihisa, Wako-shi, Saitama-ken (JP); Iijima, Yoshihiro, Wako-shi, Saitama-ken (JP); Kanke, Hiroo, Wako-shi, Saitama-ken (JP)
(74) Representative: KOHLER SCHMID + PARTNER

(56) References cited:
- WO-A-88/09079
- US-A- 2 926 542
- US-A- 4 987 788
- US-A- 5 014 800
- US-A- 5 163 528
- US-A- 5 164 623
- SOVIET INVENTIONS ILLUSTRATED, P,Q section, week 8913, 1989, May 10, DERWENT PUBLICATIONS LTD., London; & SU-A-1425 101 (MOKHOV)

## Description

### BACKGROUND OF THE INVENTION

### Field of the Invention

This invention relates to a motor with a gear reducer, which is suitable for use as a wheel motor employed in a vehicle, etc.

### Prior Art

In prior art, there are known wheel motors for use in vehicles, such as electric vehicles, fork lift trucks, and golf carts. These wheel motors for vehicles each include an electric motor, a gear reducer for reducing a rotative driving force from the electric motor, and a housing accommodating the electric motor and the gear reducer.

Wheel motors of this kind, which are each equipped with a gear reducer, specially require that the electric motor and the gear reducer should be mounted so as not to interfere with the body of a vehicle on which the wheel motor is mounted, when wheels of the vehicle move upward and downward or when they are turning. To meet such a requirement, wheel motors have been proposed, e.g. by Japanese Laid-Open Patent Publication (Kokai) No. 2-11419 (see US-A-5 014 800) and Japanese Laid-Open Patent Publication (Kokai) No.4-185207 (see US-A-5 163 528), which are constructed such that an electric motor and an epicycle reduction gear are arranged in a central space defined by an inner periphery of a wheel, wherein a rotative driving force from the electric motor is transmitted through the reduction gear to the wheel to rotatively drive the same.

However, these conventional wheel motors employ epicycle reduction gears, which requires such a construction that an output shaft, which transmits the rotative driving force from the rotor of the electric motor through the epicycle reduction gear to the wheel, is divided into two parts in the axial direction of the wheel motor such that the rotative driving force is first transmitted through one of the parts, and then through the reduction gear, to be then transmitted through the other part which is coaxial with the one part. As a result, the conventional wheel motor is complicated in construction and hence difficult to assemble. Besides, the output shaft necessarily has a short span along which it supports the wheel, etc. so that the supporting strength of the output shaft is too low to prevent the wheel including the tire from falling sideways.

Further, if the electric motor is formed by a brushless motor, the wheel motor has to be specially designed so as to mount a sensor for sensing the position of the rotor, which further makes the construction complicated.

Still further, the conventional wheel motors include a control circuit for driving the electric motor, which is mounted at a frame of the vehicle body on which the wheel motor is mounted, which requires provision of a space for mounting the control circuit, on the frame side. In addition, it requires arranging many electric lines such as a feeder line and signal lines extending between the vehicle body frame and the wheel motor to connect between the control circuit and the electric motor, which also results in increased lengths of these electric lines.

Moreover, the feeder line and the signal lines are located at low locations between the wheel and the vehicle body frame and hence can be placed under bad environmental conditions. Therefore, it is very difficult to take measures to protect them against rainwater, mud, etc.

One way to overcome these difficulties may be to accommodate a control circuit for driving the electric motor in the housing. However, the control circuit includes power-feeding semiconductor elements for controlling electric power, such as MOSFET's for controlling current applied to coils of the electric motor, which can generate heat in an amount greater than a heating value generated from the coils. Therefore, it is necessary to take perfect measures to radiate the heat of the semiconductor elements. As such measures, one will conceive arranging the power-feeding semiconductor elements at a location where peripheral component parts are not adversely affected by heat from the semiconductor elements, or providing a large-sized radiating plate which dissipates heat from the semiconductors to a sufficient degree. However, since the semiconductors are accommodated in a limited space within the electric motor, it is required to employ a housing having an enlarged internal space or employ a large-sized housing due to a complicated layout of wiring of the lines.

Further, a motor with a gear reducer of this kind is manufactured by a method involving steps of mounting the gear reducer into the inside, wiring feeder and signal lines in the inside and drawing them to the outside. Therefore, the motors should be constructed so as to facilitate assemblage or disassemblage for maintenance.

Particularly in the case where the motor is constructed such that power-feeding semiconductors or a control circuit therefor is accommodated in the inside, it requires a very complicated operation of wiring electric lines within the housing and extending them to the outside, requiring a lot of time and labor to assemble and disassemble the electric motor.

Further, in the case where an electric motor with a magnetic rotor formed by a permanent magnet is employed, the attractive force of the permanent magnet is so strong that during the assemblage, it is difficult to mount the rotor so as to prevent the rotor from being attracted to the stator. Therefore, it is required for each step to be simplified as much as possible to reduce the time and labor for the assemblage.

US-A 2,926,542 discloses a portable reduction gear unit including an electric motor, a housing, field coils, an armature, a hollow drive shaft and a driven shaft connected to the hollow drive shaft through a plurality of gears. A partition wall divides an inner region of the housing into a space accommodating the component parts of the electrical motor (the field coils, the armature and the like) and a space accommodating the components of a gear. The housing consists of two separate parts with one part accommodating the component parts of the motor and having the partition wall formed therein and the other part accommodating the component parts of the gear. The partition wall is formed integrally on one part of the housing such that this partition wall cannot be handled as a modular unit independent of the other parts of the housing. In particular the partition wall cannot be treated as an independent unit for mounting the field coils so that, when assembling the device of this unit, the electric motor and gear must be fit into one housing.

WO-A 88 09079 discloses an electric motor including a housing comprising a fixed part and a removable part. The inner space of the housing is divided by a partition member into a space accommodating the component parts of the gear unit and a space accommodating the component parts of the electric motor. The partition member is formed by a leg extending radially from the fixed part of the housing and having an L-shaped section to accommodate the component parts of the gear unit and is not independent from the fixed part of the housing. During assembly a plurality of component parts such as the stator and other component parts of the motor must be mounted to a removable part of the housing. This requires fitting the removable part of the housing into a fixed part of the housing with the component parts of the gear unit mounted therein.

### SUMMARY OF THE INVENTION

It is a first object of the invention to provide a motor with a gear reducer, which is simple in construction and easy to assemble, and has a long supporting span of an output shaft thereof so that the supporting strength of the output shaft is increased to a level enough to prevent the wheel from falling sideways.

It is a second object of the invention to provide a motor with a gear reducer, which is light in weight and compact in size.

It is a third object of the invention to provide a motor with a gear reducer, which accommodates within its housing a sensor for sensing the position of a rotor thereof and a control circuit board for driving an electric motor thereof, while maintaining good environmental conditions for the sensor and the control circuit board.

It is a fourth object of the invention to provide a motor with a gear reducer, which dispenses with the need of provision of a space for accommodating an electric circuit for driving an electric motor thereof, at a frame of an object, such as a vehicle, on which the motor is to be mounted, to reduce the number of electric lines connecting between the frame and the motor, thereby improving the mountability onto objects and hence widening the range of objects on which the motor can be mounted, even to objects other than vehicles.

It is a fifth object of the invention to provide a motor with a gear reducer, which can achieve a satisfactory heat radiation efficiency of semiconductors for controlling electric power incorporated in the housing, without complicating the arrangement of the electric lines or using a large-sized housing even when measures are taken for heat radiation of the semiconductors.

It is a sixth object of the invention to provide a motor with a gear reducer, which is capable of simplifying the assemblage or maintenance thereof.

According to a first embodiment of the invention, there is provided a motor with a gear reducer, comprising:
an electric motor for generating a rotating output; and a gear reducer having a plurality of gears including a final stage gear having an axial through hole formed therein in coaxial relation to an axis of rotation of the final stage gear;
the electric motor including a housing having opposite end portions, a stator secured to the housing and having an inner periphery defining a central space therein, a rotor rotatably fitted in the central space of said stator, for generating the rotating output during rotation thereof, the rotor having an axial through hole formed therein in coaxial relation to an axis of rotation of the rotor, an output shaft connected through the gear reducer to the rotor to be rotatively driven thereby for outputting the rotating output from the rotor through the gear reducer;
the housing comprising a first casing having an end portion forming one of the opposite end portions of the housing and accommodating the electric motor, a second casing having an end portion forming the other of the opposite end portions of the housing and accommodating the gear reducer, and a partition member interposed between the first and second casings and separating them from each other, the partition member having an axial through hole and a mounting portion at which the stator of the electric motor is secured to the housing, wherein means are provided for fastening together the first casing, the partition member, and the second casing in one body;
the output shaft being rigidly fitted in and extending through the axial through hole of the final stage gear of the gear reducer, the axial through hole of the partition member and the axial through hole of the rotor, the output shaft being rotatably supported by the end portion of the first casing and the end portion of the second casing, in a manner being out of contact with the axial through hole of the rotor.

Preferably, the motor with the gear reducer includes bearing means rotatably supporting the rotor on the output shaft.

Also preferably, the electric motor comprises a brushless electric motor having a magnet rotor forming the rotor, and sensor means for sensing a position of the magnet rotor;
the gear reducer having at least one gear of at least one predetermined reduction stage disposed in eccentricity with the output shaft, and a rotary shaft supporting the at least one gear of the at least one predetermined reduction stage; the partition member having first and second surfaces facing the first and second casings, respectively, and having a first mounting portion formed integrally on the first surface thereof, the first mounting portion forming the mounting portion of the stator of the electric motor, and a second mounting portion formed integrally on the first surface thereof, at which the sensor means is mounted in the housing, the partition member having a supporting portion formed integrally on the second surface thereof and supporting the rotary shaft.

Preferably, the motor with the gear reducer includes a wall formed integrally on at least one of the second casing and the partition member and defining a second space portion between the second casing and the partition member, the second space portion being separated from a first space portion of the second casing in which the gear reducer is arranged, and a control circuit accommodated in the second space portion, for driving the electric motor.

Preferably, the second space portion has a horseshoe-shaped configuration, and the first space portion is located inside the second space portion, the first space portion accommodating the output shaft and the gear reducer.

According to a second embodiment of the invention there is provided a motor with a gear reducer, comprising:
an electric motor for generating a rotating output; a gear reducer;
said electric motor including a housing, a stator secured to said housing and having an inner periphery defining a central space therein, a rotor rotatively fitted in said central space of said stator, for generating said rotating output during rotation thereof, and an output shaft connected through said gear reducer to said rotor to be rotatively driven thereby, for outputting said rotating output from said rotor through said gear reducer; and an electric circuit arranged in said housing together with said electric motor, for driving said electric motor;
wherein said gear reducer includes a final stage gear having an axial through hole formed therein in coaxial relation to an axis of rotation of said final stage gear, and at least one reduction gear means interposed between said rotor and said final stage gear and disposed in eccentricity to said output shaft;
said housing comprising a first casing accommodating said electric motor, a second casing accommodating said gear reducer, and a partition member interposed between said first and second casings and separating them from each other, and defining therein an accommodation space having a shape of a concentric circle with said output shaft, said accommodation space comprising a first space portion accommodating said output shaft of said electric motor and said at least one reduction gear means of said gear reducer, and a second space portion accommodating said electric circuit, wherein means are provided for fastening together said first casing, said partition member, and said second casing in one body.

According to a third embodiment of the invention there is provided a motor with a gear reducer,
comprising:
an electric motor for generating a rotating output, said electric motor having an output shaft and a housing; a gear reducer;
said output shaft being connected to said gear reducer, for outputting a rotating output from said electric motor transmitted through said gear reducer; said housing comprising a first casing accommodating said electric motor, a second casing accommodating said gear reducer, and a partition member interposed between said first and second casings and separating them from each other, wherein means are provided for fastening together said first casing, said partition member, and said second casing in one body;
said output shaft of said electric motor extending through said partition member and being rotatably supported by said first and second casings;
said housing including a wall formed integrally on at least one of said second casing and said partition member and defining a second space portion between said second casing and said partition member, said second space portion being separated from a first space portion of said second casing in which said gear reducer is arranged; and
an electric circuit including a driving circuit for driving said electric motor, and a control circuit for controlling said driving circuit, at least said control circuit of said electric circuit being arranged in said second space portion.

Preferably the output shaft extends through the partition member and is rigidly fitted in and extends through the axial through hole of the final stage gear of the gear reducer, the output shaft being rotatably supported by the first casing and the second casing.

Further preferably the housing includes a wall formed integrally on at least one of the second casing and the partition member and defines the second space portion between the second casing and the partition member, the second space portion being separated from the first space portion accommodating the at least one reduction gear means; the electric circuit including a driving circuit for driving the electric motor, and a control circuit for controlling the driving circuit, at least the control circuit being arranged in the second space portion.

The electric motor preferentially comprises a brushless electric motor having a magnet rotor forming the rotor, and sensor means for sensing a position of the magnet rotor; the gear reducer having at least one gear of at least one predetermined reduction stage disposed in eccentricity with the output shaft, and a rotary shaft supporting the at least one gear of the at least one predetermined reduction stage, the partition member having first and second surfaces facing the first and second casings, respectively, the partition member having a mounting portion formed integrally on the first surface thereof, at which the sensor means is mounted in the housing, the partition member having a supporting portion formed integrally on the second surface thereof and supporting the rotary shaft.

The wall preferentially cooperates with the second casing and the partition member to define therebetween a space having a horseshoe-shaped configuration as the second space portion, the wall defining a space portion located inside the second space portion as the first space portion.

According to a fourth embodiment of the invention there is provided a motor with a gear reducer,
comprising:
an electric motor having a stator, and a plurality of windings wound on said stator;
a gear reducer;
a housing comprising a first casing accommodating said electric motor, a second casing accommodating said gear reducer, and a partition member interposed between said first and second casings and separating them from each other, said partition member having a surface facing said first casing, wherein means are provided for fastening together said first casing, said partition member, and said second casing in one body;
said partition member having a mounting portion formed on said surface thereof, at which said stator of said electric motor is secured to said housing, said mounting portion being projected toward said first casing;
at least one semiconductor element for supplying electric power to said windings wound on said stator of said electric motor said at least one semiconductor element each having a heat-radiating surface; and
mounting means mounting said at least one semiconductor element at a location radially inward of said mounting portion of said partition member in a manner such that said heat-radiating surface of said at least one semiconductor element is held in close contact with said surface of said partition member facing said first casing.

According to a fifth embodiment of the invention, there is provided a motor with a gear reducer, comprising:
an electric motor having a stator and a plurality of windings wound on the stator;
a gear reducer;
a housing comprising a first casing accommodating the electric motor and having an end surface, a second casing accommodating the gear reducer and a partition member interposed between the first and second casings and separating them from each other, the partition member having a surface facing the first casing, wherein means are provided for fastening together the first casing, the partition member, and the second casing in one body;
electric power lines for feeding electric power from a power source provided externally of the housing;
the partition member having a mounting portion formed on the surface thereof, at which the stator of the electric motor is secured to the housing, the mounting portion being projected toward the first casing;
connecting means arranged within a space defined between the partition member and the electric motor for connecting between the windings wound on the stator and the electric power lines;
leader line passage means extending through the mounting portion of the partition member and the first casing, the leader line passage means leading the electric power lines therethrough and for permitting the electric power line to be drawn from the end surface of the first casing to outside of the housing; and
slipout-preventing means for preventing the electric power line from slipping out of the leader line passage means.

Preferentially, a circuit board is arranged in a space defined between the partition member and the electric motor at a location radially inward of the mounting portion of the partition member, the circuit board connecting the windings wound on the stator to each other, and at least one semiconductor element mounted on the circuit board for converting electric power from the electric power line to driving current and feeding the driving current to the windings wound on the stator the circuit board and the semiconductor element forming the connecting means.

The motor with a gear reducer preferentially includes a wall formed integrally on at least one of the second casing and the partition member and defining a second space portion between the second casing and the partition member, the second space portion being separated from a first space portion of the second casing in which the gear reducer is arranged, and a control circuit accommodated within the second space portion, for controlling the at least one semiconductor element.

The motor with a gear reducer preferentially comprises a brushless electric motor having a magnet rotor forming the rotor, the at least one semiconductor element each having a heat-radiating surface;
the motor including mounting means mounting the at least one semiconductor element at a location radially inward of the mounting portion of the partition member in a manner such that the heat-radiating surface of the at least one semiconductor element is held in close contact with the surface of the partition member facing the first casing, the mounting means including means securely holding the at least one semiconductor element between the circuit board and the partition member;
the at least one semiconductor element being arranged at the location radially inward of the mounting portion of the partition member in a manner such that at least part of the heat-radiating surface of the at least one semiconductor element held in close contact with the surface of the partition member facing the first casing is located within a region opposed to the magnet rotor of the electric motor.

The motor with a gear reducer preferentially includes an output shaft connected through the gear reducer to the rotor to be rotatively driven thereby, the at least one semiconductor element comprising a plurality of semiconductor elements radially arrranged around the output shaft of the rotor.

The motor with the gear reducer according to the first to fifth aspects of the invention may be advantageously applied to a wheel motor being installable on an object having an object body, comprising a wheel having an inner peripheral portion defining a central space therein. The electric motor of the motor with the gear reducer is arranged in the central space of the wheel, for generating a rotating output for rotatively driving the wheel, and the output shaft of the motor is drivingly connected to the gear reducer and the wheel, for transmitting the rotating output from the electric motor transmitted through the gear reducer, to the wheel.

The above and other objects and advantages of the invention will be more apparent from the following detailed description taken in conjuntion with the accompanying drawings. The features shown in the drawing can be used individually or collectively in arbitrary combination without departing from the scope of the invention.
Fig. 1 is a longitudinal sectional view showing the construction of a motor with a gear reducer, which is applied to a wheel motor, according to an embodiment of the invention;
Fig. 2 is a transverse sectional view showing a section in Fig. 1 in which an electric motor is mounted;
Fig. 3 is a transverse sectional view showing a section in Fig. 1 in which a first circuit board is mounted;
Fig. 4 is a transverse sectional view showing a section in Fig. 1 in which a second circuit board is mounted;
Fig. 5 is a longitudinal sectional view showing the construction of a motor with a gear reducer, which is applied to a wheel motor, according to another embodiment of the invention;
Fig. 6 is a transverse sectional view showing a section in Fig. 5 in which an electric motor is mounted;
Fig. 7 is a plan view showing a second circuit board appearing in Fig. 5; and
Fig. 8 is a transverse sectional view showing a section in Fig. 5 in which a first circuit board is mounted;

### DETAILED DESCRIPTION

The invention will now be described in detail with reference to the drawings showing preferred embodiments thereof. Throughout all the drawings showing the embodiments of the invention, corresponding elements and parts are designated by identical reference numerals. The embodiments of the drawing have exemplary character only and do not represent an exhaustive enumeration of inventive configurations.

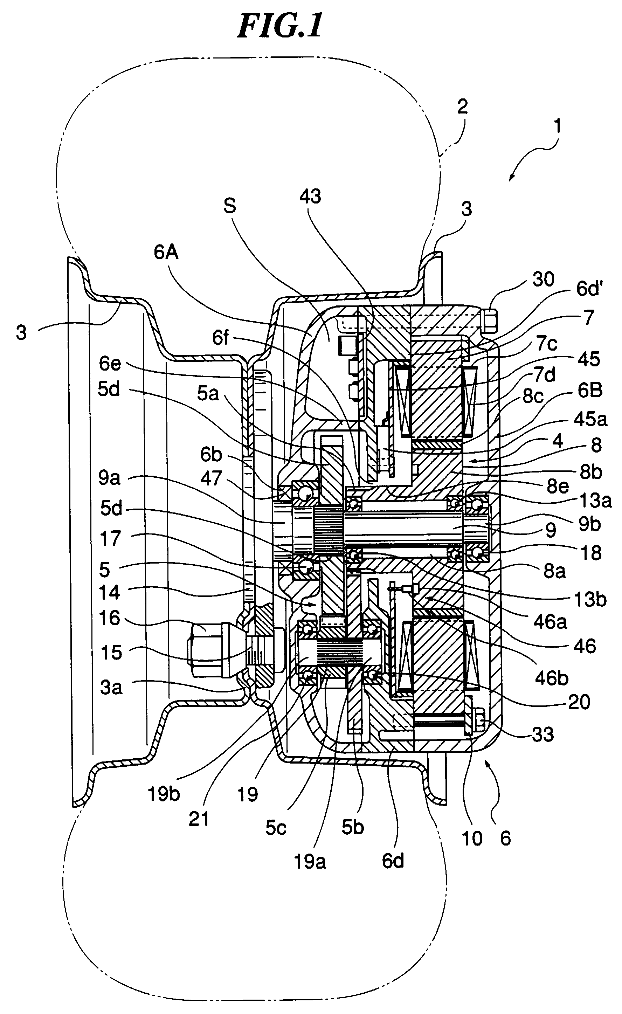

First, a first embodiment of the invention will be described with reference to Figs. 1 to 4. Fig. 1 shows the construction of a motor with a gear reducer, which is applied to a wheel motor, according to the first embodiment. In the figure, reference numeral 1 designates a wheel motor, which includes an electric motor 4, and a gear reducer 5, which are accommodated in a housing 6 arranged in a central space defined in a wheel 3 with a tire 2 by an inner periphery thereof. The electric motor 4 is drivingly connected through the gear reducer 5 to the wheel 3, whereby the wheel 3 is rotatively driven by a rotative driving force generated by the electric motor 4.

The housing 6 of the wheel motor 1 is comprised of an outer casing 6A having a generally cap-shaped configuration, an inner casing 6B, and a partition plate member 6d interposed therebetween. The outer casing 6A, the inner casing 6B and the partition plate member 6d are fastened together by means of bolts 30. The outer and inner casings 6A, 6B and the partition plate member 6d are formed of die castings.

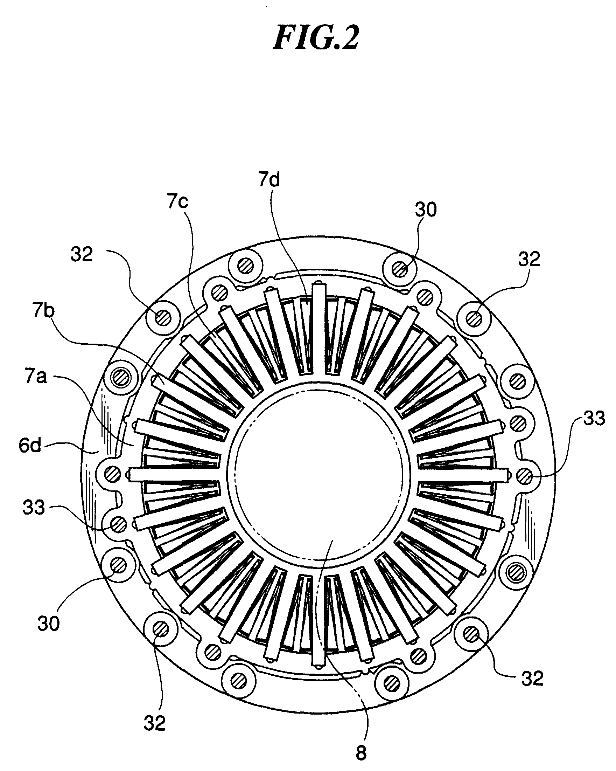

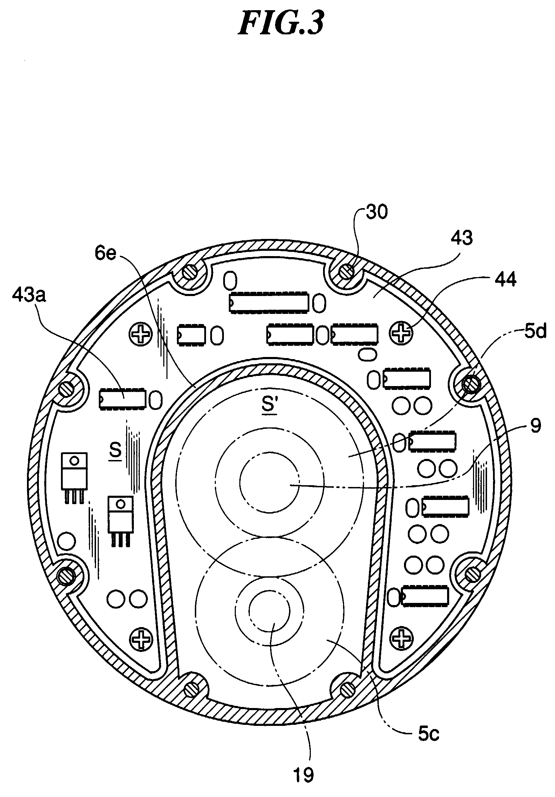

The outer casing 6A has a central portion thereof formed with an axial through hole 6b, and a partition wall 6e formed integrally on an inner side surface thereof (i.e. inside the housing 6), which defines a space S having a horseshoe-shaped configuration (Fig. 3) and separated from the gear reducer 5. The inner casing 6B is fixed to a vehicle body, not shown, by means of bolts 32 shown in Fig. 2.

The electric motor 4 is a brushless electric motor having a permanent magnet rotor 8, a three-phase stator winding (field coils 7d), and a position sensor 46 for sensing the position of the rotor 8. The electric motor 4 is comprised of a stator 7 with a closed slot core, which is accommodated in the inner casing 6B, a rotor 8 rotatably arranged in a central space defined by an inner periphery of the stator 7, and an output shaft 9 disposed to transmit a rotating output (rotative driving force) from the rotor 8 through the gear reducer 5 to the wheel 3.

The stator 7 has a magnetic pole core 7b, and a yoke core 7a arranged around the outer periphery of the magnetic pole core 7b, as shown in Fig. 2. The magnetic pole core 7b is formed of a laminate of a multiplicity of magnetic sheets formed integrally with a plurality of projections as pole teeth extending radially outward from a central annular portion through which the rotor 8 penetrates. The pole teeth are arranged circumferentially of the central annular portion at equal intervals, with closed slots formed between each adjacent pair of pole teeth by the central annular portion.

Three-phase field coils 7d are wound on the respective pole teeth of the magnetic pole core 7b via coil bobbins 7c, forming the stator winding.

The yoke core 7a is formed of a laminate of a multiplicity of annular magnetic sheets formed with a plurality of notches in an inner periphery thereof. These notches in the inner periphery each form an engaging groove in which the tip of a corresponding pole tooth of the magnetic pole core 7b is fitted.

The outer periphery of the yoke core 7a is held between a stator-fitting portion 6d' of the partition plate member 6d and a retaining plate 10 and fixed to the stator-fitting portion 6d' by means of bolts 33.

The rotor 8 has a rotor main body (enlarged diameter portion) 8b having an axial through hole (rotative central hole or hollow portion) 8a formed therein in coaxial relation to the axis of rotation of the rotor 8 and axially extending through the whole length of the rotor 8, a plurality of permanent magnet members 8c secured to an outer peripheral portion of the main body 8b at circumferentially equal intervals, and a thinned portion (reduced diameter portion) 8e axially extending integrally from one end of the main body 8b and having a longer axial size than that of the main body 8b. The tip of the thinned portion 8e is formed integrally with teeth forming a first gear 5a of the gear reducer 5. The main body 8b, which is shorter in axial length than the thinned portion 8e, is rotatably fitted in a central space defined in the stator 7 by an inner periphery thereof, in facing relation thereto. The rotor 8 is rotatably supported on the output shaft 9 by means of bearings 13a and 13b formed by ball bearings or the like, which are force-fitted between the rotor main body 8b and the thinned portion 8e and the output shaft 9, for rotation about the output shaft 9.

The output shaft 9 has a fitting flange 14 formed integrally on an end portion 9a thereof, which is secured to a hub 3a of the wheel 3 by means of bolts 15 and nuts 16. The end portion 9a of the output shaft 9 is rotatably supported in the axial through hole 6b of the outer casing 6A via a bearing 17 formed by a ball bearing or the like, and the other end portion 9b of the output shaft 9 in a central recess formed in the inner casing 6B via a bearing 18 formed by a ball bearing or the like, respectively. The output shaft 9 extends through the axial through hole 8a of the rotor 8 by means of the bearings 13a and 13b in a fashion being out of contact with the inner wall of the hole 8a. An annular seal member 47 is interposed between the axial through hole 6b of the outer casing 6A and the output shaft 9 to seal them against the outside. In this embodiment, the electric motor 4 mainly formed of the stator 7 and the rotor 8 has a short axial length, presenting a generally flat configuration, which realizes a shorter axial size of the whole wheel motor 1, i.e. a shorter size thereof along the output shaft 9.

The gear reducer 5 is a double reduction type, which is comprised of a plurality of (four in the illustrated embodiment) gears, i.e. the gear 5a, and gears 5b, 5c and 5d. The first gear 5a is formed integrally on the tip of the thinned portion 8e (left end portion as viewed in Fig. 1) of the rotor 8, in concentricity with the rotor 8. The second and third gears 5b, 5c are both rigidly fitted on a common rotary shaft (supporting shaft) 19, for rotation in unison with each other. The second gear 5b is in mesh with the first gear 5a. The supporting shaft 19 is located below the output shaft 9 in eccentricity therewith. The supporting shaft 19 is rotatably supported by the partition plate member 6d and the outer casing 6A such that an end portion 19a of the supporting shaft 19 is rotatably fitted in a recess formed in the partition plate member 6d via a bearing 20 formed by a ball bearing or the like, and the other end portion 19b in a recess formed in the outer casing 6A by means of a bearing 21 formed by a ball bearing or the like, respectively.

The fourth or final stage gear 5d is rigidly fitted on the output shaft 9 for rotation in unison therewith. The fourth gear 5d is in mesh with the third gear 5c. With the above stated arrangement, when the rotor 8 is rotated due to the action of a rotating magnetic field formed by the stator 7, the first gear 5a integral with the rotor 8 rotates together with the rotor 8, i.e. at the same rotational speed as the latter. A rotating output from the first gear 5a is transmitted through the second and third gears 5b, 5c while being reduced in speed, to the fourth gear 5d, whereby the output shaft 9 and the wheel 3 are rotated at the same rotational speed as the fourth gear 5d, i.e. at a reduced rotational speed, and in the same rotational direction as the rotor 8. For example, when the rotor 8 rotates in the positive direction at 750 rpm, the output shaft 9 and the wheel 3 rotate in the positive direction at a speed of 150 rpm as a result of speed reduction by the gear reducer 5.

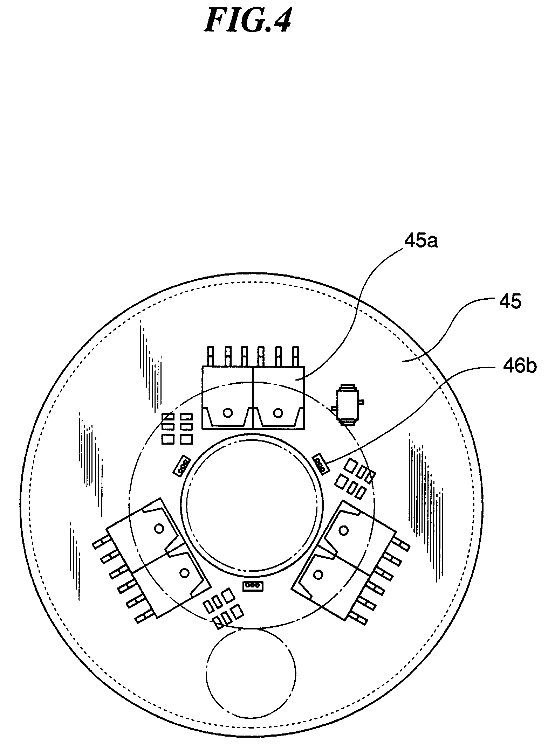

The partition plate member 6d has a central portion thereof formed with a through hole 6f through which the thinned portion 8e of the rotor 8 extends in a fashion being out of contact with the inner wall of the through hole 6f. A first circuit board 43, which forms a control circuit for driving the electric motor 4, is mounted in the space S defined by the partition plate member 6d and the horseshoe-shaped partition wall 6e of the outer casing 6A and secured to the partition plate member 6d by means of set screws 44, as shown in Fig. 3. A second circuit board 45 in the form of a doughnut, formed, e.g. by a bus plate, which forms a driving circuit driven by a signal from the control circuit, for supplying driving current to the electric motor 4, as shown in figure 4, is mounted in a space defined by the reverse side surface of the partition plate member 6d and the electric motor 4, and secured to the plate member 6d by suitable means, not shown. Since the space S for accommodating the control circuit thus has a horseshoe-shaped configuration, it provides practically a large spatial size for accommodating various circuit component parts of the control circuit, in a limited space within the housing 6. The output shaft 9 of the electric motor 4 and the gear 5c, supporting shaft 19, etc. of the gear reducer 5 are accommodated in a space S' defined inside the space S, by the horseshoe-shaped partition wall 6e, as shown in Fig. 3.

The first circuit board 43, which has a horseshoe-shaped surface configuration, has mounted thereon various circuit component parts 43a, such as an IC, forming the control circuit for driving the electric motor 4, while the second circuit board 45 has mounted thereon circuit component parts, such as a power transistor (power MOSFET) 45a, forming the driving circuit for supplying driving current to the field coils 7c, described hereinafter. Insulation film sheets, not shown, are interposed between the partition plate member 6d and the first and second circuit boards 43, 45. The first circuit board 43 and the second circuit board 45 are connected to each other by a cable and a connector, not shown.

As shown in Figs. 1 and 4, a position sensor 46 for sensing the position of the electric motor 4 is provided, which is formed of a ring-like magnet member 46a embedded in an end surface of the rotor 8, and a plurality of magnetic pole sensor elements 46b mounted on an opposed surface of the second circuit board 45 at circumferentially equal intervals of a predetermined angle (e.g. 120° ) at such locations as they can encounter the ring-like magnet member 46a.

The magnetic pole sensor elements 46b may be typically formed by magnetic sensor elements such as a Hall element. However, the position sensor 46 may be any known sensor means including a photo sensor.

Next, the manner of assembling the wheel motor 1 of the present embodiment constructed as above will be described. First, the output shaft 9 is mounted into the outer casing 6A which has been previously force-fitted therein with the seal member 47 and the bearings 17, 21. Then, the second to fourth gears 5b, 5c and 5d of the gear reducer 5 are mounted into the outer casing 6A.

Then, the first and second circuit boards 43, 45, and the stator 7 are mounted onto the partition plate member 6d, followed by wiring therebetween. The rotor 8 with the bearings 13a, 13b previously force-fitted therein is then inserted into the stator 7. Finally, the outer casing 6A, the partition plate member 6d, and the inner casing 6B with the bearings 18 previously force-fitted therein, are fastened together in one body by means of the bolts 30.

According to the present embodiment, the output shaft 9 of the electric motor 4 is rotatably supported by the opposite end portions of the housing 6, while the output shaft extends through an axial through hole of the fourth gear 5d as the final stage gear of the gear reducer 5 and the axial through hole 8a of the rotor 8. As a result, the construction of the wheel motor 1 can be simplified notwithstanding the arrangement of the electric motor 4 and the gear reducer 5 in the central space inside the wheel 3. Besides, the wheel motor 1 can be assembled by fitting into respective places the outer casing 6A, the component parts of the gear reducer 5, the partition plate member 6d, the component parts of the electric motor 4, and the inner casing 6B in the order mentioned, with reference to the output shaft 9, thus facilitating the assemblage. Further, in this embodiment, the output shaft 9 of the electric motor 4 is substantially supported by opposite end portions of the housing 6, which makes it possible to set the supporting span of the output shaft 9 to a large value, in spite of the shorter axial size of the whole wheel motor 1, thereby obtaining sufficient strength for supporting the wheel 3 with the tire 2 so as to prevent it from falling sideways.

Particularly, according to this embodiment, the control circuit for driving the electric motor 4 is arranged in the space S separated by the horseshoe-shaped partition wall 6e, whereby the space for mounting the control circuit at the frame of the vehicle body on which the wheel motor 1 is to be mounted is no more required. Besides, the control circuit can be protected against rainwater, mud and the like, as well as against lubricating oil, powder produced due to wear of the gears, etc. splashed by rotation of the output shaft 9, the gear reducer 5, etc. Further, the control circuit can be protected against heat radiated from the electric motor 4. Moreover, the number of electric power lines to be wired between the vehicle body frame and the wheel motor 1 can be reduced (e.g. if the electric motor 4 is a three-phase type, the power electric lines can be reduced in number from 3 to 2; and if the motor is grounded to the vehicle body, only one electric power line is required), to thereby reduce the limitations on mounting the wheel motor 1 according to the invention onto bodies of vehicles, in other words, facilitate the installability of the wheel motor onto vehicle bodies, and even make it possible to use the wheel motor in other moving objects than vehicles, i.e. enhance the versatility. Further, since the electric motor 4 is formed by a brushless type electric motor with a permanent magnet rotor 8, and the position sensor 46 is arranged on the rotor 8 side, in other words, the position sensor 46 is arranged in the vicinity of the rotor 8 while it is separated from the gear reducer 5, the position sensor 46 is placed in a good environmental condition, similarly to the case of the control circuit, while shorter sensor signal lines can be used between the control circuit and the position sensor, thus preventing noise from being picked up by the sensor signal lines.

Still further, according to the present embodiment, the rotor 8 is rotatably supported on the output shaft 9 via the bearings 13a, 13b, which makes it possible to use bearings with reduced diameters as the bearings 13a, 13b. Particularly, the employment of a double reduction gear as the gear reducer 5 is advantageous to this arrangement in that the rotor 8 and the output shaft 9 rotate in the same direction, and hence the relative rotational speed difference between them is small, which leads to a reduced amount of abrasion.

The present invention is not limited to the above described embodiment, but any modifications and variations thereto are possible within the scope of the appended claims. For example, in the above described embodiment, the horseshoe-shaped partition wall 6e may be formed integrally with the partition plate member 6d, instead of being formed integrally with the outer casing 6A. Further alternatively, halves of the partition wall 6e may be formed integrally with the outer casing 6A and the partition plate member 6d, respectively, so as to be joined together when the wheel motor is assembled.

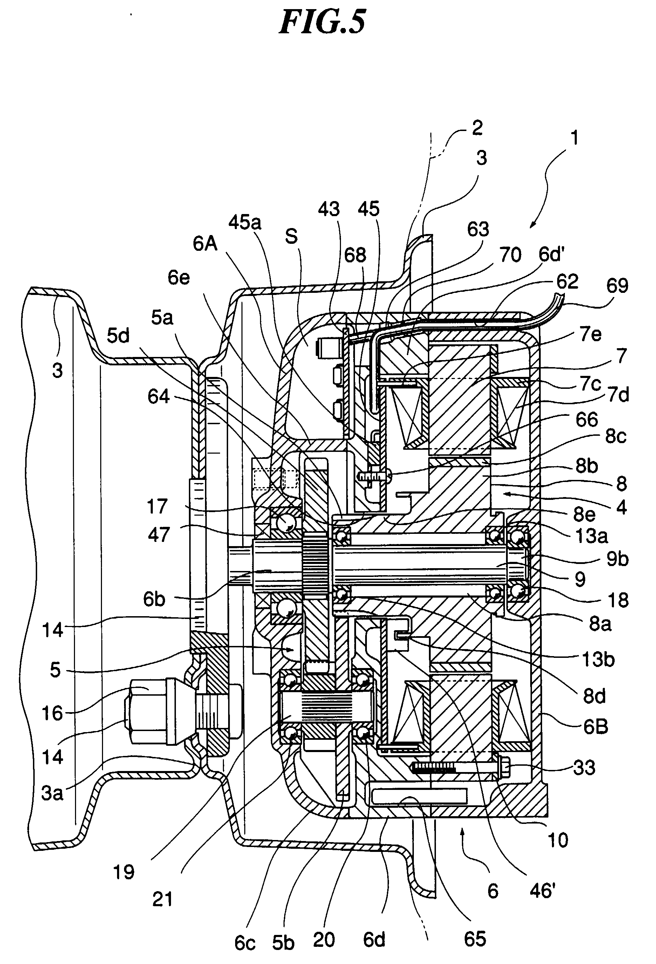

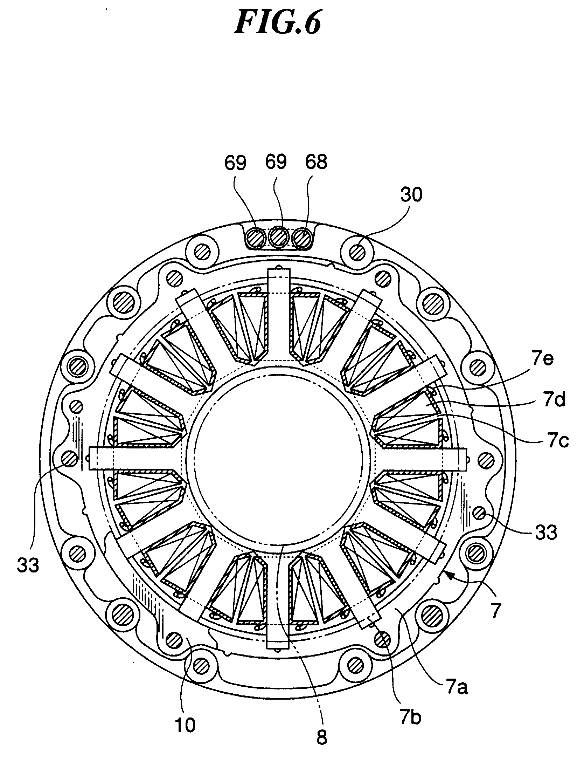

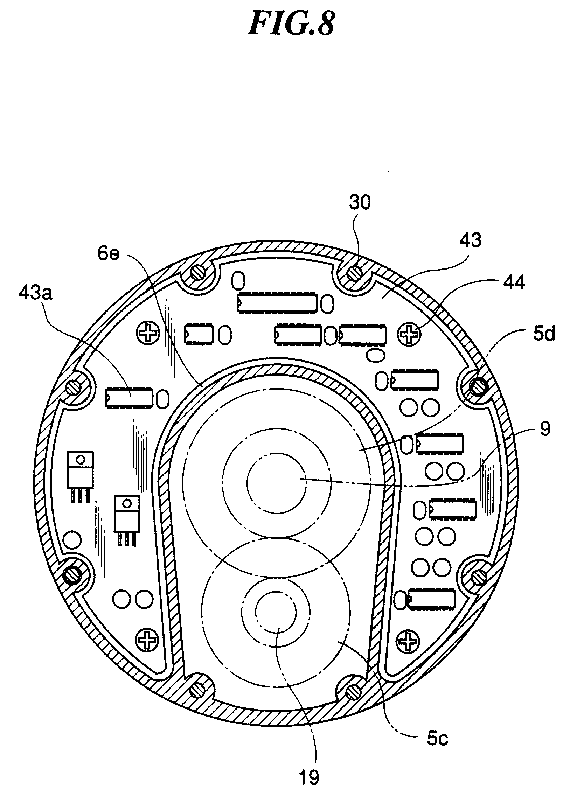

Next, another embodiment of the invention will be described with reference to Figs. 5 to 8. In the figures, component elements and parts corresponding to those in Figs. 1 to 4 are designated by identical numerals, and description thereof is omitted. Also this embodiment is applied to a wheel motor.

The inner casing 6B has three holes 62 formed in an outer peripheral portion thereof and extending from the partition plate member 6d side to an outer end surface of the inner casing 6B.

The partition plate member 6d has a stator-fitting portion 6d' formed integrally on an outer peripheral portion thereof and axially projected toward the inner casing 6B. The stator-fitting portion 6d' has three holes 63 formed therethrough in axial alignment with the respective corresponding holes 62 of the inner casing 6B. Each hole 63 has a diameter larger than the diameter of the corresponding hole 62. The partition plate member 6d has a central portion formed therein with a through hole 64 through which the central thinned portion 8e of the rotor main body 8b, penetrates in a fashion being out of contact therewith.

The rotor 8 has a projection 8d axially projected toward the partition plate member 6d, for detecting the position of the rotor 8. The projection 8d has notches formed therein and arranged at circumferentially equal intervals.

The second circuit board 45 arranged between the partition plate member 6d and the electric motor 4, which forms the driving circuit for supplying driving current to the electric motor 4, is formed by a doughnut-shaped bus plate and has an outer size smaller than the diameter of a central hole 65 of the stator fitting portion 6d'. The bus plate is fixed to the partition plate member 6d by means of set screws 66 penetrating power transistors 45a. The portions of the second circuit board 45 at which it is fixed to the partition plate member 6d by the set screws 66 are set so as to fall within a projection range of the rotor 8 with respect to the output shaft 9, i.e. such a range that the power transistors 45a mounted on the second circuit board 45 are located within a region axially opposed to the rotor 8.

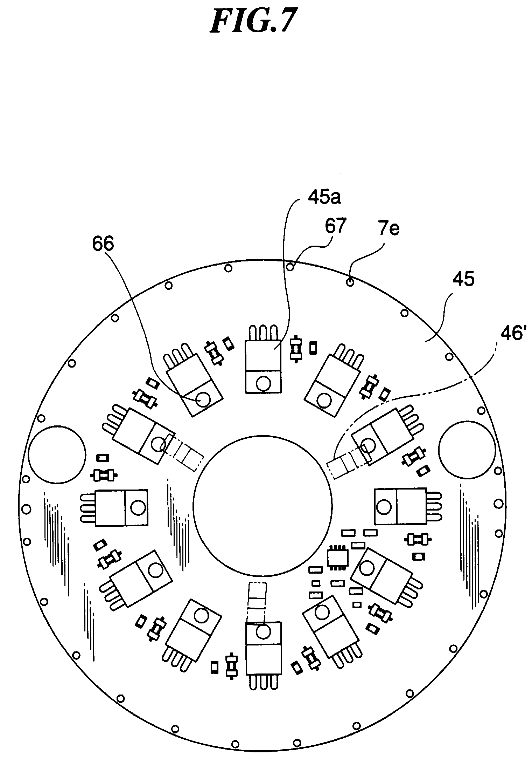

The second circuit board 45 has a plurality of printed circuits, not shown, on both sides thereof, and through holes 67 (Fig. 7) formed therethrough, which are connected to the printed circuits. The through holes 67 are arranged along the outer periphery of the second circuit board 45 at circumferential equal intervals, through which end portions 7e of the respective corresponding field coils 7d are connected to the second circuit board 45. The field coils 7d are connected to each other by securely connecting between each through hole 67 and the corresponding end portion 7e of the field coil 7d.

Mounted on a surface of the second circuit board 45, which faces the partition plate member 6d, are a plurality of power transistors (power MOSFET's) 45a and other circuit component parts for supplying electric current to the field coils 7d via the end portions 7e thereof. The power transistors 45a and the other circuit component parts are connected to the respective corresponding printed circuits by soldering. The power transistors 45a are radially arranged on the second circuit board 45, with respect to the center of the second circuit board 45 (center of the output shaft 9), and mounted such that heat-radiating surfaces (surfaces facing the partition plate member 6d) of the transistors 45a are in close contact with an end surface of the partition plate member 6d which faces the inner casing 6B, and that at least part of the portions of the power transistors 45a in close contact with the partition plate member 6d axially face the rotor 8. Further, each power transistor 45a has its heat-radiating surface portion tightly held between the second circuit board 45 and the partition plate member 6d. In the present embodiment, twelve power transistors 45a are employed for the three-phase rotor winding, that is, four transistors 45a are employed for one phase.

Since each power transistor 45a thus has its heat-radiating surface held in close contact with the end surface of the partition plate member 6d which faces the inner casing 6B, the partition plate member 6d serves as a heat-radiating plate for the power transistors 45a, to thereby obtain a large heat-radiating area and hence achieve a satisfactory heat-radiating efficiency of the power transistors 45a. Besides, even though the power transistors 45 with large heat generation amounts are accommodated within the inner space of the housing 6, use of a large-sized housing of the wheel motor can be avoided.

Further, since the doughnut-shaped second circuit board 45 which has a smaller outer size than the diameter of the central hole 65 of the stator-fitting portion 6d' projected toward the inner casing 6B side is accommodated within the central hole 65 with the power transistors 45a mounted thereon, an increase in the axial size of the housing 6 can be minimized in spite of the mounting of the power transistors 45a on the second circuit board 45, thereby achieving a reduced entire thickness of the motor 1, i.e. a reduced axial size of the same and hence avoiding enlargement of the motor 1.

Still further, since at least part of portions of the power transistors 45a in close contact with the partition plate member 6d are arranged at a location axially opposed to the rotor 8 instead of the field coils 7d of the stator 7, the location of the power transistors 45a is remote from the field coils 7d of the stator 7, whereby the power transistors 45a and the field coils 7d are less affected by heat generated from each other.

Moreover, since the power transistors 45a are radially arranged on the second circuit board 45 with respect to the center of the same (center of the output shaft 9) in a fashion being circumferentially separated from each other, heat radiated from each transistor 45a can be equally dispersed.

Further, since the power transistors 45a are mounted onto the second circuit board 45 which connects the field coils 7d of the rotor 7 to each other, followed by wiring, the large-current path can be shortened. As a result, the wiring is simplified and the circuit resistance (loss) can be reduced.

Still further, since the power transistors 45a are not only securely mounted on the second circuit board 45 by connecting the former to the printed circuits, but also securely held between the second circuit board 45 and the partition plate member 6d, both the power transistors 45a and the second circuit board 45 can be securely mounted in place.

A control line 68 formed by a bundle of a plurality of small signal lines is connected to the first circuit board 43 to supply control signals thereto from the outside. The control line 68 is guided via one of the holes 63 formed through the stator-fitting portion 6d' of the partition plate member 6d and the corresponding hole 62 formed through the inner casing 6B and aligned with the hole 63, to the outside of the housing 6. A slipout-preventing element, not shown, is mounted on the control line 68 at a location corresponding to the hole 63 to protect the first circuit board 43 against a pulling force applied from the outside.

Similarly, a pair of electric power lines 69 are connected to the second circuit board 45 to supply direct current for driving the electric motor 4, from the outside. The electric power lines 69 are guided via the two other corresponding holes 63 of the stator-fitting portion 6d', and then via the respective corresponding holes 62 of the inner casing 6B and aligned with the holes 63, to the outside of the housing 6. Slipout-preventing elements 70 are mounted on the electric power lines 69 at respective locations corresponding to the holes 63, similarly to the control line 68, to protect the second circuit board 45 against a pulling force applied from the outside.

Three photo-type position sensors 46' are mounted on the surface of the second circuit board 45 facing the inner casing 6B, to detect the position of the rotor 8 of the electric motor 4. These sensors 46' are arranged on the second circuit board 45 at locations opposed to the projection 8d of the rotor 8 at circumferential intervals of a predetermined angle (120° in the present embodiment). The position of the rotor 8 of the electric motor 4 is detected based on signals supplied from the sensors 46'. Specifically, the signals are generated in response to interruption and release of light paths formed by the sensors 46' by the projection 8d revolving with the rotating rotor 8.

Next, the manner of assembling the motor with the gear reducer according to the present embodiment will be described. For the assembly of the motor with the gear reducer, first, an outer casing unit is formed by force-fitting a sealing member 47 and bearings 17 and 21 into the outer casing 6A. Then, an inner casing unit is formed by force-fitting the bearings 18 into the inner casing 6B. Further, a partition plate member unit is formed by mounting the stator 7, the first circuit board 43, and the second circuit board 45 onto the both sides of the partition plate member 6d and connecting them together by wiring, etc.

In forming the partition plate member unit, first, the bearing 20 is mounted into the partition plate member 6d by force-fitting or the like. Then, connection is made between the through holes 67 of the second circuit board 45 on which the power transistors 45a and the other circuit component parts are mounted and connected to the printed circuits, and the corresponding end portions 7e of the field coils 7d, whereby the second circuit board 45 and the stator 7 are secured to each other in one body.

Then, the slipout-preventing elements 70 are mounted onto the electric power lines 69 which have been connected to the second circuit board 45. The electric power lines 69 are drawn out through the holes 63 formed through the stator-fitting portion 6d' to the outside of the partition plate member 6d.

After the drawing-out of the electric power lines 69 to the outside, the stator 7 to which the second circuit board 45 is integrally fixed is mounted in a fashion being held between the stator-fitting portion 6d' of the partition plate member 6d and the retaining plate 10 by means of the bolts 33.

Next, the second circuit board 45 is fixed together with the heat-radiating plates of the power transistors 45a through a central hole of the stator 7 for mounting the rotor 8, to the partition plate member 6d by the set screws 66. Since the portions of the second circuit board 45 at which it is fixed to the portion plate member 6d by the set screws 66 are set to fall within the region axially opposed to the rotor 8, a screwdriver or the like can be easily inserted through the rotor-mounting central hole of the stator 7 to mount the set screws 66 to the second circuit board 45.

Then, the first circuit board 43 is mounted onto the surface of the partition plate member 6d reverse to the surface thereof on which second circuit board 45 is mounted, and then the first circuit board 43 and the second circuit board 45 are connected together by a connector, not shown. Further, the slipout-preventing element is mounted onto the control line 68, similarly to the electric power lines 69. The control line 68 is drawn out through the corresponding hole 63 of the stator-fitting portion 6d' to the outside of the partition plate member 6d.

Thus, the partition plate member unit is completed, in which the partition plate member 6d has the stator 7, the first circuit board 43 and the second circuit board 45 mounted thereon and connected to each other.

After completion of the units, in the outer casing unit, the output shaft 9 with the fourth gear 5d secured thereto, and the supporting shaft 19 with the second and third gears 5b, 5c secured thereto are mounted into the outer casing 6A.

Then, the partition plate member unit is provisionally fitted onto the outer casing unit and aligned therewith in such a fashion that the output shaft 9 penetrates through the through hole 64 of the partition plate member 6d and the rotary shaft 19 is supported by the bearings 20 and 21.

Then, the rotor 8 with the bearings 13a and 13b force-fitted in the inner surface is inserted into the internal space of the stator 7 while the bearings 13a and 13b are fitted onto the output shaft 9. The rotor 8 is thus supported by the output shaft 9 via the bearings 13a and 13b.

Next, the electric power lines 69 and the control line 68 are drawn out through the holes 62 of the inner casing 6B of the inner casing unit to the outside, whereby the inner casing unit is aligned with the partition plate member unit so as to cover the surface of the stator-fitting portion 6d' of the partition plate member 6d. The end portion of the output shaft 9 is thus supported by the bearing 18 previously fitted in the inner casing 6B.

Finally, the outer casing unit, the partition plate member unit, and the inner casing unit are fastened together in one body by the bolts 30, to thereby complete the assembly of the motor 1.

According to the present embodiment described above, the partition plate member 6d has mounted thereon the stator 7, the first circuit board 43 and the second circuit board 45, with a pair of the electric power lines 69 and the control line 68 connected respectively to the first and second circuit boards 43 and 45 and extending through the extension holes 63 in a fashion being prevented from slipping out from the holes 63 by means of the slipout-preventing elements. As a result, the partition plate member 6d can be handled separately from the outer casing 6A and the inner casing 6B, leading to simplification of the assemblage of the motor 1. Further, disassemblage of the motor 1, etc. for maintenance is facilitated.

Thus, the housing 6 of the motor 1 with the gear reducer has a reduced thickness or axial size, which enables accommodating an increased number of component parts inside the wheel 3. As a result, the motor with the gear reducer according to the invention can be used as a wheel motor for vehicles, which has no fear of interference between the electric power lines 69 and the control line drawn out to the outside and the wheel 3, thereby facilitating the assemblage and maintenance.

Further, according to the motor 1 with the gear reducer of the above described embodiments, an increased number of component parts can be accommodated inside the wheel 3 as mentioned above. As a result, a space for mounting the electric motor to be provided in a vehicle can be extremely reduced as compared with the conventional wheel motors. This makes it possible to easily convert a human-driven vehicle with no motor to a motorized vehicle by replacing a wheel thereof by a wheel equipped with a motor with a gear reducer according to the invention.

## Claims

1. A motor with a gear reducer, comprising:
an electric motor (4) for generating a rotating output;
and a gear reducer (5) having a plurality of gears including a final stage gear (5d) having an axial through hole formed therein in coaxial relation to an axis of rotation of said final stage gear (5d);
said electric motor (4) including a housing (6) having opposite end portions, a stator (7) secured to said housing (6) and having an inner periphery defining a central space therein, a rotor (8) rotatably fitted in said central space of said stator (7), for generating said rotating output during rotation thereof, said rotor (8) having an axial through hole (8a) formed therein in coaxial relation to an axis of rotation of said rotor (8), an output shaft (9) connected through said gear reducer (5) to the rotor (8) to be rotatively driven thereby for outputting said rotating output from said rotor (8) through said gear reducer (5);
said housing (6) comprising a first casing (6B) having an end portion forming one of said opposite end portions of said housing (6) and accommodating said electric motor (4), a second casing (6A) having an end portion forming the other of said opposite end portions of said housing (6) and accommodating said gear reducer (5), and a partition member (6d) interposed between said first and second casings (6B, 6A) and separating them from each other, said partition member (6d) having an axial through hole (6f) and a mounting portion (6d') at which said stator (7) of said electric motor (4) is secured to said housing (6), wherein means (30) are provided for fastening together said first casing (6B), said partition member (6d), and said second casing (6A) in one body;
said output shaft (9) being rigidly fitted in and extending through said axial through hole of said final stage gear (5d) of said gear reducer (5), said axial through hole of said partition member (6d) and said axial through hole of said rotor (8), said output shaft (9) being rotatably supported by said end portion of said first casing (6B) and said end portion of said second casing (6A), in a manner being out of contact with said axial through hole of said rotor (8).

2. A motor with a gear reducer, as claimed in claim 1, including bearing means (13a, 13b) rotatably supporting said rotor (8) on said output shaft (9).

3. A motor with a gear reducer, as claimed in claim 1, wherein said electric motor (4) comprises a brushless electric motor having a magnet rotor forming said rotor, and sensor means (46) for sensing a position of said magnet rotor;
said gear reducer (5) having at least one gear (5b, 5c) of at least one predetermined reduction stage disposed in eccentricity with said output shaft (9), and a rotary shaft (19) supporting said at least one gear of said at least one predetermined reduction stage;
said partition member (6d) having first and second surfaces facing said first and second casings (6B, 6A), respectively, and having a first mounting portion formed integrally on said first surface thereof, said first mounting portion forming said mounting portion of said stator (7) of said electric motor (4), and a second mounting portion formed integrally on said first surface thereof, at which said sensor means (46) is mounted in said housing (6), said partition member (6d) having a supporting portion formed integrally on said second surface thereof and supporting said rotary shaft (19).

4. A motor with a gear reducer, as claimed in claim 3, including a wall (6e) formed integrally on at least one of said second casing (6A) and said partition member (6d) and defining a second space portion (S) between said second casing (6A) and said partition member (6d), said space (S) being separated from a first space portion (S') of said second casing (6A) in which said gear reducer (5) is arranged, and a control circuit accommodated in said second space portion (S), for driving said electric motor (4).

5. A motor with a gear reducer, as claimed in claim 4, wherein said second space portion (S) has a horseshoe-shaped configuration, and said first space (S') accommodates said output shaft (9) as well as said gear reducer (5).

6. A wheel motor being installable on an object having an object body, comprising:
a wheel (3) having an inner peripheral portion defining a central space therein;
and
an electric motor with a gear reducer (5) as claimed in claim 1, the electric motor (4) being arranged in said central space of said wheel (3), for generating a rotating output for rotatively driving said wheel and the gear reducer (5) being arranged in said central space of said wheel;
wherein said housing (6) is fixed to said object body and said output shaft (9) is drivingly connected to said wheel (3) for transmitting said rotating output from said rotor (8) through said gear reducer (5) to said wheel (3).

7. A motor with a gear reducer, comprising:
an electric motor (4) for generating a rotating output; a gear reducer (5);
said electric motor (4) including a housing (6), a stator (7) secured to said housing (6) and having an inner periphery defining a central space therein, a rotor (8) rotatively fitted in said central space of said stator (7), for generating said rotating output during rotation thereof, and an output shaft (9) connected through said gear reducer (5) to said rotor (8) to be rotatively driven thereby, for outputting said rotating output from said rotor (8) through said gear reducer (5); and
an electric circuit (43) arranged in said housing (6) together with said electric motor (4), for driving said electric motor (4);
wherein said gear reducer (5) includes a final stage gear (5d) having an axial through hole formed therein in coaxial relation to an axis of rotation of said final stage gear (5d), and at least one reduction gear means (5b, 5c) interposed between said rotor (8) and said final stage gear (5d) and disposed in eccentricity to said output shaft (9);
said housing (6) comprising a first casing (6B) accommodating said electric motor (4), a second casing (6A) accommodating said gear reducer (5), and a partition member (6d) interposed between said first and second casings (6B, 6A) and separating them from each other, and defining therein an accommodation space having a shape of a concentric circle with said output shaft (9), said accommodation space comprising a first space portion (S') accommodating said output shaft (9) of said electric motor (4) and said at least one reduction gear means (5b, 5c) of said gear reducer (5), and a second space portion (S) accommodating said electric circuit (43), wherein means (30) are provided for fastening together said first casing (6B), said partition member (6d), and said second casing (6A) in one body.

8. A motor with a gear reducer, as claimed in claim 7, wherein said output shaft (9) extends through said partition member (6d) and is rigidly fitted in and extends through said axial through hole of said final stage gear (5d) of said gear reducer (5), said output shaft (9) being rotatably supported by said first casing (6B) and said second casing (6A).

9. A motor with a gear reducer, as claimed in claim 7, wherein said housing (6) includes a wall (6e) formed integrally on at least one of said second casing (6A) and said partition member (6d) and defines said second space portion (S) between said second casing (6A) and said partition member (6d), said second space portion (S) being separated from said first space portion (S') accommodating said at least one reduction gear means; said electric circuit including a driving circuit (45) for driving said electric motor (4), and a control circuit (43) for controlling said driving circuit, at least said control circuit (43) being arranged in said second space portion (S).

10. A motor with a gear reducer, as claimed in claim 9, wherein said electric motor (4) comprises a brushless electric motor having a magnet rotor forming said rotor (8), and sensor means (46) for sensing a position of said magnet rotor (8);
said gear reducer (5) having at least one gear (5b, 5c) of at least one predetermined reduction stage disposed in eccentricity with said output shaft (9), and a rotary shaft (19) supporting said at least one gear of said at least one predetermined reduction stage, said partition member (6d) having first and second surfaces facing said first and second casings (6B, 6A), respectively, said partition member (6d) having a mounting portion formed integrally on said first surface thereof, at which said sensor means (46) is mounted in said housing (6), said partition member (6d) having a supporting portion formed integrally on said second surface thereof and supporting said rotary shaft (19).

11. A motor with a gear reducer, as claimed in claim 9 or 10, wherein said wall (6e) cooperates with said second casing (6A) and said partition member (6d) to define therebetween a space having a horseshoe-shaped configuration as said second space portion (S), said wall defining a space portion located inside said second space portion (S) as said first space portion (S').

12. A motor with a gear reducer, comprising:
an electric motor (4) for generating a rotating output, said electric motor (4) having an output shaft (9) and a housing (6);
a gear reducer (5);
said output shaft (9) being connected to said gear reducer (5), for outputting a rotating output from said electric motor (4) transmitted through said gear reducer (5);
said housing (6) comprising a first casing (6B) accommodating said electric motor (4) a second casing (6A) accommodating said gear reducer (5), and a partition member (6d) interposed between said first and second casings (6B, 6A) and separating them from each other, wherein means (30) are provided for fastening together said first casing (6B), said partition member (6d), and said second casing (6A) in one body;
said output shaft (9) of said electric motor (4) extending through said partition member (6d) and being rotatably supported by said first and second casings (6B, 6A) ;
said housing (6) including a wall (6e) formed integrally on at least one of said second casing (6A) and said partition member (6d) and defining a second space portion (S) between said second casing (6A) and said partition member (6d), said second space portion (S) being separated from a first space portion (S') of said second casing (6A) in which said gear reducer (5) is arranged; and
an electric circuit including a driving circuit (45) for driving said electric motor (4), and a control circuit (43) for controlling said driving circuit, at least said control circuit of said electric circuit being arranged in said second space portion (S).

13. A motor with a gear reducer, as claimed in claim 12, wherein said electric motor (4) comprises a brushless electric motor having a magnet rotor forming said rotor (8), and sensor means (46) for sensing a position of said magnet rotor (8);
said gear reducer (5) having at least one gear (5b, 5c) of at least one predetermined reduction stage disposed in eccentricity with said output shaft (9), and a rotary shaft (19) supporting said at least one gear of said at least one predetermined reduction stage, said partition member (6d) having first and second surfaces facing said first and second casings (6B, 6A), respectively, said partition member (6d) having a mounting portion formed integrally on said first surface thereof, at which said sensor means (46) is mounted in said housing (6), said partition member (6d) having a supporting portion formed integrally on said second surface thereof and supporting said rotary shaft (19).

14. A motor with a gear reducer, as claimed in claim 12 or 13, wherein said wall (6e) cooperates with said second casing (6A) and said partition member (6d) to define therebetween a space having a horseshoe-shaped configuration as said second space portion (S), and said first space portion (S') located inside said second space portion, said second space portion accommodating said control circuit (43), said first space portion accommodating said output shaft (9) and said gear reducer (5).

15. A wheel motor being installable on an object having an object body, comprising:
a wheel (3) having an inner peripheral portion defining a central space therein; and
an electric motor with a gear reducer (5) as claimed in claim 7, the electric motor (4) being arranged in said central space of said wheel (3), for generating a rotating output for rotatively driving said wheel and the gear reducer (5) being arranged in said central space of said wheel;
wherein said housing (6) is fixed to said object body and said output shaft (9) is drivingly connected to said wheel (3) for transmitting said rotating output from said rotor (8) through said gear reducer (5) to said wheel (3).

16. A wheel motor as claimed in claim 15, wherein said gear reducer (5) includes a final stage gear (5d) having an axial through hole formed therein in coaxial relation to an axis of rotation of said final stage gear (5d), and at least one reduction gear means (5b, 5c) interposed between said rotor (8) and said final stage gear (5d) and disposed in eccentricity to said output shaft (9), said at least one reduction gear means of said gear reducer (5) being arranged in said first space portion (S').

17. A wheel motor as claimed in claim 16, wherein said output shaft (9) extends through said partition member (6d) and is rigidly fitted in and extends through said axial through hole of said final stage gear (5d) of said gear reducer (5), said output shaft (9) being rotatably supported by said first casing (6B) and said second casing (6A).

18. A wheel motor as claimed in claim 15, wherein said output shaft (9) extends through said partition member (6d) and is rotatably supported by said first casing (6B) and said second casing (6A);
said housing (6) including a wall (6e) formed integrally on at least one of said second casing (6A) and said partition member (6d) and defining said second space portion (S) between said second casing (6A) and said partition member (6d), said second space portion (S) being separated from said first space portion (S') accommodating said gear reducer (5);
said electric circuit including a driving circuit (45) for driving said electric motor (4), and a control circuit (43) for controlling said driving circuit, at least said control circuit (43) being arranged in said second space portion (S).

19. A wheel motor as claimed in claim 18, wherein said electric motor (4) comprises a brushless electric motor having a magnet rotor forming said rotor (8), and sensor means (46) for sensing a position of said magnet rotor (8);
said gear reducer (5) having at least one gear (5b, 5c) of at least one predetermined reduction stage disposed in eccentricity with said output shaft (9), and a rotary shaft (19) supporting said at least one gear of said at least one predetermined reduction stage, said partition member (6d) having first and second surfaces facing said first and second casings (6B, 6A), respectively, said partition member (6d) having a mounting portion formed integrally on said first surface thereof, at which said sensor means (46) is mounted in said housing (6), said partition member (6d) having a supporting portion formed integrally on said second surface thereof and supporting said rotary shaft (19).

20. A wheel motor with a gear reducer, as claimed in claim 18 or 19, wherein said wall (6e) cooperates with said second casing (6A) and said partition member (6d) to define therebetween a space (S) having a horseshoe-shaped configuration as said second space portion (S), said wall defining said first space portion (S') located inside said second space portion (S).

21. A wheel motor being installable on an object having an object body, comprising:
a wheel (3) having an inner peripheral portion defining a central space therein; and
an electric motor with a gear reducer (5) as claimed in claim 12, the electric motor (4) being arranged in said central space of said wheel (3) for generating a rotating output for rotatively driving said wheel and the gear reduced (5) being arranged in said central space of said wheel;
wherein said housing (6) is fixed to said object body and said output shaft (9) is drivingly connected to said wheel (3) for transmitting said rotating output from said rotor (8) through said gear reducer (5) to said wheel (3).

22. A wheel motor as claimed in claim 21, wherein said electric motor (4) comprises a brushless electric motor having a magnet rotor forming said rotor (8), and sensor means (46) for sensing a position of said magnet rotor (8);
said gear reducer (5) having at least one gear (5b, 5c) of at least one predetermined reduction stage disposed in eccentricity with said output shaft (9), and a rotary shaft (19) supporting said at least one gear of said at least one predetermined reduction stage, said partition member (6d) having first and second surfaces facing said first and second casings (6B, 6A), respectively, said partition member (6d) having a mounting portion formed integrally on said first surface thereof, at which said sensor means (46) is mounted in said housing (6), said partition member (6d) having a supporting portion formed integrally on said second surface thereof and supporting said rotary shaft (19).

23. A wheel motor with a gear reducer, as claimed in claim 21 or 22, wherein said wall (6e) cooperates with said second casing (6A) and said partition member (6d) to define therebetween a space (S) having a horseshoe-shaped configuration as said second space portion (S), said wall defining said first space portion (S') located inside said second space portion (S).

24. A motor with a gear reducer, comprising:
an electric motor (4) having a stator (7), and a plurality of windings (7d) wound on said stator (7);
a gear reducer (5);
a housing (6) comprising a first casing (6B) accommodating said electric motor (4), a second casing (6A) accommodating said gear reducer (5), and a partition member (6d) interposed between said first and second casings (6B, 6A) and separating them from each other, said partition member (6d) having a surface facing said first casing (6B), wherein means (30) are provided for fastening together said first casing (6B), said partition member (6d), and said second casing (6A) in one body;
said partition member (6d) having a mounting portion formed on said surface thereof, at which said stator (7) of said electric motor (4) is secured to said housing (6), said mounting portion being projected toward said first casing (6B);
at least one semiconductor element (45a) for supplying electric power to said windings (7d) wound on said stator (7) of said electric motor (4) said at least one semiconductor element (45a) each having a heat-radiating surface; and
mounting means (66) mounting said at least one semiconductor element (45a) at a location radially inward of said mounting portion of said partition member (6d) in a manner such that said heat-radiating surface of said at least one semiconductor element (45a) is held in close contact with said surface of said partition member (6d) facing said first casing (6B).

25. A motor with a gear reducer as claimed in claim 24, including a circuit board (45) arranged in a space defined between said partition member (6d) and said electric motor (4) and connecting said windings (7d) wound on said stator (7) to each other, said at least one semiconductor element (45a) being mounted on said circuit board (45).

26. A motor with a gear reducer as claimed in claim 25, wherein said mounting means (66) includes means securely holding said at least one semiconductor element (45a) between said circuit board (45) and said partition member (6d).

27. A motor with a gear reducer as claimed in claim 25 or 26, wherein said electric motor (4) comprises a brushless electric motor having a magnet rotor forming said rotor (8), said at least one semiconductor element (45a) being arranged at said location radially inward of said mounting portion of said partition member (6d) in a manner such that at least part of said heat-radiating surface of said at least one semiconductor element (45a) held in close contact with said surface of said partition member (6d) facing said first casing (6B) is located within a region opposed to said magnet rotor (8) of said electric motor (4).

28. A motor with a gear reducer as claimed in claim 27, including an output shaft (9) connected through said gear reducer (5) to said rotor (8) to be rotatively driven thereby, said at least one semiconductor element (45a) comprising a plurality of semiconductor elements (45a) radially arranged around said output shaft (9) of said rotor (8).

29. A wheel motor being installable on an object having an object body, comprising:
a wheel (3) having an inner peripheral portion defining a central space therein; and
an electric motor with a gear reducer (5) as claimed in claim 24, the electric motor (4) being arranged in said central space of said wheel (3), for generating a rotating output for rotatably driving said wheel (3), the electric motor (4) having a rotor (8) and an output shaft (9), said stator (7) having an inner periphery defining a central space therein, said rotor (8) being rotatably fitted in said central space of said stator (7) for generating said rotating output during rotation thereof;
wherein said housing (6) is fixed to said object body and said output shaft (9) is drivingly connected to said wheel (3) for transmitting said rotating output from said rotor (8) through said gear reducer (5) to said wheel (3).

30. A motor with a gear reducer, comprising:
an electric motor (4) having a stator (7) and a plurality of windings (7d) wound on said stator (7);
a gear reducer (5);
a housing (6) comprising a first casing (6B) accommodating said electric motor (4) and having an end surface, a second casing (6A) accommodating said gear reducer (5) and a partition member (6d) interposed between said first and second casings (6B, 6A) and separating them from each other, said partition member (6d) having a surface facing said first casing (6B), wherein means (30) are provided for fastening together said first casing (6B), said partition member (6d), and said second casing (6A) in one body;
electric power lines (69) for feeding electric power from a power source provided externally of said housing (6);
said partition member (6d) having a mounting portion formed on said surface thereof, at which said stator (7) of said electric motor (4) is secured to said housing (6), said mounting portion being projected toward said first casing (6B);
connecting means arranged within a space defined between said partition member (6d) and said electric motor (4) for connecting between said windings (7d) wound on said stator (7) and said electric power lines (69) ;
leader line passage means extending through said mounting portion of said partition member (6d) and said first casing (6B), said leader line passage means leading said electric power lines (69) therethrough and for permitting said electric power line (69) to be drawn from said end surface of said first casing (6B) to outside of said housing (6); and
slipout-preventing means for preventing said electric power line (69) from slipping out of said leader line passage means.

31. A motor with a gear reducer as claimed in claim 30, including a circuit board (45) arranged in a space defined between said partition member (6d) and said electric motor (4) at a location radially inward of said mounting portion of said partition member (6d), said circuit board (45) connecting said windings (7d) wound on said stator (7) to each other, and at least one semiconductor element (45a) mounted on said circuit board (45) for converting electric power from said electric power line (69) to driving current and feeding said driving current to said windings (7d) wound on said stator (7) said circuit board (45) and said semiconductor element (45a) forming said connecting means.

32. A motor with a gear reducer as claimed in claim 31, said housing (6) including a wall (6e) formed integrally on at least one of said second casing (6A) and said partition member (6d) and defining a second space portion (S) between said second casing (6A) and said partition member (6d), said second space portion (S) being separated from a first space portion (S') of said second casing (6A) in which said gear reducer (5) is arranged, and a control circuit (43) accommodated within said second space portion (S), for controlling said at least one semiconductor element (45a).

33. A motor with a gear reducer as claimed in claim 30 or 31, wherein said electric motor (4) comprises a brushless electric motor having a magnet rotor forming said rotor (8), said at least one semiconductor element (45a) each having a heat-radiating surface;
said motor (4) including mounting means mounting said at least one semiconductor element (45a) at a location radially inward of said mounting portion of said partition member (6d) in a manner such that said heat-radiating surface of said at least one semiconductor element (45a) is held in close contact with said surface of said partition member (6d) facing said first casing (6B), said mounting means including means securely holding said at least one semiconductor element (45a) between said circuit board (45) and said partition member (6d);
said at least one semiconductor element (45a) being arranged at said location radially inward of said mounting portion of said partition member (6d) in a manner such that at least part of said heat-radiating surface of said at least one semiconductor element (45a) held in close contact with said surface of said partition member (6d) facing said first casing (6B) is located within a region opposed to said magnet rotor (8) of said electric motor (4).

34. A motor with a gear reducer, as claimed in claim 33, including an output shaft (9) connected through said gear reducer (5) to said rotor (8) to be rotatively driven thereby, said at least one semiconductor element (45a) comprising a plurality of semiconductor elements (45a) radially arrranged around said output shaft (9) of said rotor (8).

35. A wheel motor being installable on an object having an object body, comprising:
a wheel (3) having an inner peripheral portion defining a central space therein; and
an electric motor with a gear reducer (5) as claimed in claim 30, the electric motor (4) being arranged in said central space of said wheel (3), for generating a rotating output for rotatably driving said wheel (3), the electric motor (4) having a rotor (8) and an output shaft (9), said stator (7) having an inner periphery defining a central space therein, said rotor (8) being rotatably fitted in said central space of said stator (7) for generating said rotating output during rotation thereof;
wherein said housing (6) is fixed to said object body and said output shaft (9) is drivingly connected to said wheel (3) for transmitting said rotating output from said rotor (8) through said gear reducer (5) to said wheel (3).

## Patentansprüche

1. Motor mit einem Untersetzungsgetriebe, welcher aufweist:
einen elektrischen Motor (4) zum Erzeugen einer Drehleistung; und ein Untersetzungsgetriebe (5) mit einer Mehrzahl von Rädern einschließlich eines Endstufenrads (5d) mit einem axialen Durchgangsloch, welches darin in koaxialem Verhältnis zu einer Rotationsachse des Endstufenrads (5d) gebildet ist;
wobei der Elektromotor (4) beinhaltet: ein Gehäuse (6) mit einander gegenüberliegenden Endabschnitten, einen Stator (7), welcher an dem Gehäuse (6) befestigt ist und einen inneren Umfang hat, welcher darin einen zentralen Raum bildet, einen Rotor (8), welcher drehbar in dem zentralen Raum des Stators (7) angeordnet ist, um die Drehleistung während dessen Rotation zu erzeugen, wobei der Rotor (8) aufweist: ein axiales Durchgangsloch (8a), welches darin in koaxialem Verhältnis zu einer Rotationsachse des Rotors (8) gebildet ist, eine Ausgangswelle (9), die durch das Untersetzungsgetriebe (5) mit dem Rotor (8) verbunden ist, um durch diesen rotierend angetrieben zu werden, um die Rotationsleistung von dem Rotor (8) durch das Untersetzungsgetriebe (5) auszugeben;
wobei das Gehäuse (6) beinhaltet: ein erstes Gehäuse (6B), welches einen Endabschnitt aufweist, welcher einen der gegenüberliegenden Endabschnitte des Gehäuses (6) bildet und den Elektromotor (4) aufnimmt, ein zweites Gehäuse (6A) mit einem Endabschnitt, welcher den anderen der genannten gegenüberliegenden Endabschnitte des Gehäuses (6) bildet und das Untersetzungsgetriebe (5) aufnimmt, und ein Unterteilungselement (6d), welches zwischen dem ersten und dem zweiten Gehäuse (6B,6A) angeordnet ist und diese voneinander trennt, wobei das Unterteilungselement (6d) ein axiales Durchgangsloch (6f) und einen Befestigungsabschnitt (6d') aufweist, an welchem der Stator (7) des Elektromotors (4) an dem Gehäuse (6) befestigt ist, wobei Einrichtungen (30) vorgesehen sind, um das erste Gehäuse (6B), das Unterteilungselement (6d) und das zweite Gehäuse (6A) in einem Körper miteinander zu verbinden;
wobei die Ausgangswelle (9) in dem axialen Durchgangsloch des Endstufenrads (5d) des Untersetzungsgetriebes (5), dem axialen Durchgangsloch des Unterteilungselements (6d) und dem axialen Durchgangsloch des Rotors (8) unbiegsam eingepaßt ist und sich durch diese erstreckt, wobei die Ausgangswelle (9) drehbar durch den Endabschnitt des ersten Gehäuses (6B) und den Endabschnitt des zweiten Gehäuses (6A) so gestützt ist, daß sie nicht in Kontakt mit dem axialen Durchgangsloch des Rotors (8) steht.

2. Motor mit einem Untersetzungsgetriebe nach Anspruch 1, mit einer Lagereinrichtung (13a,13b), die den Rotor (8) an der Ausgangswelle (9) drehbar stützt.

3. Motor mit einem Untersetzungsgetriebe nach Anspruch 1, wobei der Elektromotor (4) einen bürstenlosen Elektromotor mit einem Magnetrotor aufweist, welcher den Rotor bildet, sowie eine Sensoreinrichtung (46) zum Abtasten einer Position des Magnetrotors;
wobei mindestens ein Rad (5b,5c) von mindestens einer vorbestimmten Untersetzungsstufe des Untersetzungsgetriebes (5) exzentrisch zu der Ausgangswelle (9) angeordnet ist, und wobei eine Drehwelle (19) das mindestens eine Rad der mindestens einen vorbestimmten Untersetzungsstufe stützt;
wobei das Unterteilungselement (6d) erste und zweite Flächen hat, welche dem ersten bzw. zweiten Gehäuse (6B,6A) zugewandt sind, sowie einen ersten Befestigungsabschnitt, welcher integral an der ersten Fläche davon gebildet ist, wobei der erste Befestigungsabschnitt den Befestigungsabschnitt des Stators (7) des Elektromotors (4) bildet, und einen zweiten Befestigungsabschnitt, welcher integral an der ersten Fläche davon gebildet ist, an welcher die Sensoreinrichtung (46) in dem Gehäuse (6) befestigt ist, wobei das Unterteilungselement (6d) einen Stützabschnitt hat, welcher integral an der zweiten Fläche davon gebildet ist und die Drehwelle (19) stützt.

4. Motor mit einem Untersetzungsgetriebe nach Anspruch 3, mit einer Wand (6e), die integral an dem zweiten Gehäuse (6A) und/oder dem Unterteilungselement (6d) gebildet ist und einen zweiten Raumabschnitt (S) zwischen dem zweiten Gehäuse (6A) und dem Unterteilungselement (6d) bildet, wobei der Raum (S) von einem ersten Raumabschnitt (S') des zweiten Gehäuses (6A) getrennt ist, in welchem das Untersetzungsgetriebe (5) angeordnet ist, und einer Steuerschaltung, die in dem zweiten Raumabschnitt (S) angeordnet ist, um den Elektromotor (4) anzutreiben.

5. Motor mit einem Untersetzungsgetriebe nach Anspruch 4, wobei der zweite Raumabschnitt (S) eine hufeisenförmige Anordnung hat und der erste Raum (S') die Ausgangswelle (9) sowie das Untersetzungsgetriebe (5) aufnimmt.

6. Radmotor, welcher an einem Objekt, das einen Objektkörper hat, installierbar ist und aufweist:
ein Fahrzeug-Rad (3) mit einem inneren Umfangsabschnitt, welcher darin einen zentralen Raum begrenzt;
und einen Elektromotor mit einem Untersetzungsgetriebe (5) nach Anspruch 1, wobei der Elektromotor (4) in dem zentralen Raum des Fahrzeug-Rades (3) zum Erzeugen einer Rotationsleistung zum rotierenden Antreiben des Fahrzeug-Rades angeordnet ist, und das Untersetzungsgetriebe (5) in dem zentralen Raum des Fahrzeug-Rades angeordnet ist; wobei das Gehäuse (6) an dem Objektkörper befestigt ist und die Ausgangswelle (9) treibend mit dem Fahrzeug-Rad (3) zum Übertragen der Drehleistung von dem Rotor (8) über das Untersetzungsgetriebe (5) an das Fahrzeug-Rad (3) verbunden ist.

7. Motor mit einem Untersetzungsgetriebe, welcher aufweist:
einen Elektromotor (4) zum Erzeugen einer Rotationsleistung;
ein Untersetzungsgetriebe (5);
wobei der Elektromotor (4) aufweist: ein Gehäuse (6), einen Stator (7), welcher an dem Gehäuse (6) befestigt ist und einen inneren Umfang hat, welcher darin einen zentralen Raum begrenzt, einen Rotor (8), welcher rotierend in dem zentralen Raum des Stators (7) befestigt ist, um die Drehleistung während dessen Rotation zu erzeugen, und eine Ausgangswelle (9), die über das Untersetzungsgetriebe (5) mit dem Rotor (8) verbunden ist, um rotierend durch dieses angetrieben zu werden, um die Rotationsleistung von dem Rotor (8) über das Untersetzungsgetriebe (5) auszugeben; und
eine elektrische Schaltung (43), die in dem Gehäuse (6) zusammen mit dem Elektromotor (4) angeordnet ist, um den Elektromotor (4) anzutreiben;
wobei das Untersetzungsgetriebe (5) ein Endstufenrad (5d) mit einem darin in koaxialem Verhältnis zu einer Rotationsachse des Endstufenrads (5d) gebildeten Durchgangsloch und mindestens eine Untersetzungsgetriebe-Einrichtung (5b,5c) aufweist, welche zwischen dem Rotor (8) und dem Endstufenrad (5d) und exzentrisch zu der Ausgangswelle (9) angeordnet ist;
wobei das Gehäuse (6) aufweist: ein erstes Gehäuse (6B), welches den Elektromotor (4) aufnimmt, ein zweites Gehäuse (6A), welches das Untersetzungsgetriebe (5) aufnimmt, und ein Unterteilungselement (6d), welches zwischen dem ersten und zweiten Gehäuse (6B,6A) angeordnet ist und diese voneinander trennt, und darin einen Aufnahmeraum von einer Form eines mit der Ausgangswelle (9) konzentrischen Kreises bildet, wobei der Aufnahme-Raum einen ersten Raumabschnitt (S'), welcher die Ausgangswelle (9) des Elektromotors (4) und die mindestens eine Untersetzungsgetriebe-Einrichtung (5b,5c) des Untersetzungsgetriebes (5) aufnimmt, und einen zweiten Raum (S), welcher die elektrische Schaltung (43) aufnimmt, aufweist, wobei eine Einrichtung (30) vorgesehen ist, um das erste Gehäuse (6B), das Unterteilungselement (6d) und das zweite Gehäuse (6A) in einem Körper miteinander zu verbinden.

8. Motor mit einem Untersetzungsgetriebe nach Anspruch 7, wobei die Ausgangswelle (9) sich durch das Unterteilungselement (6d) erstreckt und unbiegsam in dem axialen Durchgangsloch des Endstufenrads (5d) des Untersetzungsgetriebes (5) eingepaßt ist und sich durch dieses erstreckt, wobei die Ausgangswelle (9) drehbar durch das erste Gehäuse (6B) und das zweite Gehäuse (6A) gestützt ist.

9. Motor mit einem Untersetzungsgetriebe nach Anspruch 7, wobei das Gehäuse (6) eine Wand (6e) beinhaltet, die integral an dem Gehäuse (6A) und/oder dem Unterteilungselement (S) gebildet ist und den zweiten Raumabschnitt (S) zwischen dem zweiten Gehäuse (6A) und dem Unterteilungselement (6d) begrenzt, wobei der zweite Raumabschnitt (S) von dem ersten Raumabschnitt (S') getrennt ist, welcher die mindestens eine Untersetzungsgetriebe-Einrichtung aufnimmt, wobei die elektrische Schaltung eine Treiberschaltung (45) zum Antreiben des Elektromotors (4) und eine Steuerschaltung (43) zum Steuern der Antriebsschaltung beinhaltet, wobei mindestens die Steuerschaltung (43) in dem zweiten Raumabschnitt (S) angeordnet ist.

10. Motor mit einem Untersetzungsgetriebe nach Anspruch 9, wobei der Elektromotor (4) einen bürstenlosen Elektromotor mit einem Magnetrotor, welcher den Rotor (8) bildet, und eine Sensoreinrichtung (46) zum Abtasten einer Position des Magnetrotors (8) aufweist;
wobei das Untersetzungsgetriebe (5) mindestens ein Rad (5b,5c) mindestens einer vorbestimmten Untersetzungsstufe, welches exzentrisch zu der Ausgangswelle (9) angeordnet ist, und eine Drehwelle (19) aufweist, welche das mindestens eine Rad der mindestens einen vorbestimmten Untersetzungsstufe stützt, wobei das Unterteilungselement (6d) erste und zweite Flächen aufweist, die dem ersten bzw. zweiten Gehäuse (6B,6A) zugewandt sind, wobei das Unterteilungselement (6d) einen Befestigungsabschnitt hat, welcher integral an der ersten Oberfläche desselben gebildet ist, an welcher die Sensoreinrichtung (46) in dem Gehäuse (6) befestigt ist, wobei das Unterteilungselement (6d) einen Stützabschnitt hat, welcher integral an der zweiten Fläche davon gebildet ist und die Drehwelle (19) stützt.

11. Motor mit einem Untersetzungsgetriebe nach Anspruch 9 oder 10, wobei die Wand (6e) mit dem zweiten Gehäuse (6A) und dem Unterteilungselement (6d) zusammenwirkt, um dazwischen einen Raum mit einer hufeisenförmigen Anordnung als zweiten Raumabschnitt (S) zu begrenzen, wobei die Wand einen Raumabschnitt definiert, welcher in dem zweiten Raumabschnitt (S) als der erste Raumabschnitt (S') angeordnet ist.

12. Motor mit einem Untersetzungsgetriebe, welcher aufweist:
einen Elektromotor (4) zum Erzeugen einer Rotationsleistung, wobei der Elektromotor (4) eine Ausgangswelle (9) und ein Gehäuse (6) aufweist;
ein Untersetzungsgetriebe (5);
wobei die Ausgangswelle (9) mit dem Untersetzungsgetriebe (5) zur Ausgabe einer Rotationsleistung von dem Elektromotor (4), übertragen durch das Untersetzungsgetriebe (5), verbunden ist;
wobei das Gehäuse (6) ein erstes Gehäuse (6B), welches den Elektromotor (4) aufnimmt, ein zweites Gehäuse (6A), welches das Untersetzungsgetriebe (5) aufweist, und ein Unterteilungselement (6d) aufweist, welches zwischen dem ersten und zweiten Gehäuse (6A,6B) angeordnet ist und diese voneinander trennt, wobei eine Einrichtung (30) vorgesehen ist, um das erste Gehäuse (6B), das Unterteilungselement (6d) und das zweite Gehäuse (6A) in einem Körper miteinander zu befestigen; wobei sich die Ausgangswelle (9) des Elektromotors (4) durch das Unterteilungselement (6d) erstreckt und drehbar durch das erste und zweite Gehäuse (6B,6A) gestützt ist;
wobei das Gehäuse (6) eine Wand (6e) aufweist, welche integral an dem zweiten Gehäuse (6A) und/oder dem Unterteilungselement (6d) gebildet ist, und einen zweiten Raumabschnitt (3) zwischen dem zweiten Gehäuse (6A) und dem Unterteilungselement (6d) begrenzt, wobei der zweite Raumabschnitt (S) von einem ersten Raumabschnitt (S') des zweiten Gehäuses (6A) getrennt ist, in welchem das Untersetzungsgetriebe (5) angeordnet ist; und
eine elektrische Schaltung mit einer Treiberschaltung (45) zum Antreiben des Elektromotors (4) und einer Steuerschaltung (43) zum Steuern der Treiberschaltung, wobei mindestens die Steuerschaltung der elektrischen Schaltung in dem zweiten Raumabschnitt (S) angeordnet ist.

13. Motor mit einem Untersetzungsgetriebe nach Anspruch 12, wobei der Elektromotor (4) einen bürstenlosen Elektromotor mit einem Magnetrotor, welcher den Rotor (8) bildet, und eine Sensoreinrichtung (46) zum Abtasten einer Position des Magnetrotors (8) aufweist; wobei mindestens ein Rad (5b,5c) von mindestens einer vorbestimmten Untersetzungsstufe des Untersetzungsgetriebes (5) exzentrisch zu der Ausgangswelle (9) und einer Drehwelle (19) angeordnet ist, welche das mindestens eine Rad der mindestens einen vorbestimmten Untersetzungsstufe stützt, wobei das Unterteilungselement (6d) erste und zweite Oberflächen hat, welche dem ersten bzw. zweiten Gehäuse (6B,6A) zugewandt sind, wobei das Unterteilungselement (6d) einen Befestigungsabschnitt hat, welcher integral an seiner ersten Fläche gebildet ist, an welcher die Sensoreinrichtung (46) in dem Gehäuse (6) befestigt ist, wobei das Unterteilungselement (6d) einen Stützabschnitt hat, welcher integral an seiner zweiten Fläche gebildet ist und die Drehwelle (19) stützt.

14. Motor mit einem Untersetzungsgetriebe nach Anspruch 12 oder 13, wobei die Wand (6e) mit dem zweiten Gehäuse (6A) und dem Unterteilungselement (6d) zusammenwirkt, um dazwischen einen Raum von einer hufeisenförmigen Anordnung als den zweiten Raumabschnitt (S) zu begrenzen, und der erste Raumabschnitt (S') in dem zweiten Raumabschnitt angeordnet ist, wobei der zweite Raumabschnitt die Steuerschaltung (43) aufnimmt, wobei der erste Raumabschnitt die Ausgangswelle (9) und das Untersetzungsgetriebe (5) aufnimmt.

15. Radmotor, welcher an einem Objekt mit einem Objektkörper installierbar ist, und aufweist:
ein Fahrzeug-Rad (3) mit einem inneren Umfangsabschnitt, welcher darin einen zentralen Raum bildet; und
einen Elektromotor mit einem Untersetzungsgetriebe (5) nach Anspruch 7, wobei der Elektromotor (4) in dem zentralen Raum des Fahrzeug-Rades (3) zum Erzeugen einer Rotationsleistung zum rotierenden Antreiben des Fahrzeug-Rades angeordnet ist und das Untersetzungsgetriebe (5) in dem zentralen Raum des Fahrzeug-Rades angeordnet ist;
wobei das Gehäuse (6) an dem Objektkörper befestigt ist und die Ausgangswelle (9) treibend mit dem Fahrzeug-Rad (3) zur Übertragung der Rotationsleistung von dem Rotor (8) über das Untersetzungsgetriebe (5) an das Fahrzeug-Rad (3) verbunden ist.

16. Radmotor nach Anspruch 15, wobei das Untersetzungsgetriebe (5) ein Endstufenrad (5d) beinhaltet mit einem darin in koaxialem Verhältnis zu einer Rotationsachse des Endstufenrads (5d) gebildeten Durchgangsloch, und mindestens eine Untersetzungsgetriebe-Einrichtung (5b,5c), die zwischen dem Rotor (8) und dem Endstufenrad (5d) und exzentrisch zu der Ausgangswelle (9) angeordnet ist, wobei die mindestens eine Untersetzungsgetriebe-Einrichtung des Untersetzungsgetriebes (5) in dem ersten Raumabschnitt (S') angeordnet ist.

17. Radmotor nach Anspruch 16, wobei die Ausgangswelle (9) sich durch das Unterteilungselement (6d) erstreckt und unbiegsam in dem axialen Durchgangsloch des Endstufenrads (5d) des Untersetzungsgetriebes (5) eingepaßt ist und sich durch dieses erstreckt, wobei die Ausgangswelle (9) drehbar durch das erste Gehäuse (6B) und das zweite Gehäuse (6A) gestützt ist.

18. Radmotor nach Anspruch 15, wobei die Ausgangswelle (9) sich durch das Unterteilungselement (6d) erstreckt und drehbar durch das erste Gehäuse (6B) und das zweite Gehäuse (6A) gestützt ist;
wobei das Gehäuse (6) eine Wand (6e) aufweist, die integral an dem zweiten Gehäuse (6A) und/oder dem Unterteilungselement (6d) gebildet ist und den zweiten Raumabschnitt (S) zwischen dem zweiten Gehäuse (6A) und dem Unterteilungselement (6d) begrenzt, wobei der zweite Raumabschnitt (S) von dem ersten Raumabschnitt (S'), welcher das Untersetzungsgetriebe (5) aufnimmt, getrennt ist;
wobei die elektrische Schaltung eine Treiberschaltung (45) zum Antreiben des Elektromotors (4) beinhaltet, sowie eine Steuerschaltung (43) zum Steuern der Treiberschaltung, wobei zumindest die Steuerschaltung (43) in dem zweiten Raumabschnitt (S) angeordnet ist.

19. Radmotor nach Anspruch 18, wobei der Elektromotor (4) einen bürstenlosen Elektromotor mit einem Magnetrotor, welcher den Rotor (8) bildet, und eine Sensoreinrichtung (46) zum Abtasten einer Position des Magnetrotors (8) aufweist;
wobei mindestens ein Rad (5b,5c) mindestens einer vorbestimmten Untersetzungsstufe des Untersetzungsgetriebes (5) exzentrisch zu der Ausgangswelle (9) und einer Drehwelle (19) angeordnet ist, welche das mindestens eine Rad der mindestens einen vorbestimmten Untersetzungsstufe stützt, wobei das Unterteilungselement (6d) erste und zweite Flächen aufweist, die dem ersten bzw. zweiten Gehäuse (6B,6A) zugewandt sind, wobei das Unterteilungselement (6d) einen Befestigungsabschnitt aufweist, welcher integral an der ersten Fläche desselben angeordnet ist, an welcher die Sensoreinrichtung (46) in dem Gehäuse (6) befestigt ist, wobei das Unterteilungselement (6d) einen Stützabschnitt aufweist, welcher integral an der zweiten Fläche desselben gebildet ist und die Drehwelle (19) stützt.

20. Radmotor mit einem Untersetzungsgetriebe nach Anspruch 18 oder 19, wobei die Wand (6e) mit dem zweiten Gehäuse (6A) und dem Unterteilungselement (6d) zusammenwirkt, um dazwischen einen Raum (S) mit einer hufeisenförmigen Anordnung als zweiten Raumabschnitt (S) zu begrenzen, wobei die den ersten Raumabschnitt (S') begrenzende Wand innen in dem zweiten Raumabschnitt (S) angeordnet ist.

21. Radmotor, welcher an einem Objekt mit einem Objektkörper installierbar ist und aufweist:
ein Fahrzeug-Rad (3) mit einem inneren Umfangsabschnitt, welcher einen zentralen Raum darin begrenzt; und
einen Elektromotor mit einem Untersetzungsgetriebe (5) nach Anspruch 12, wobei der Elektromotor (4) in dem zentralen Raum des Fahrzeug-Rades (3) zum Erzeugen einer Rotationsleistung zum rotierenden Antreiben des Fahrzeug-Rades angeordnet ist und das Untersetzungsgetriebe (5) in dem zentralen Raum des Fahrzeug-Rades angeordnet ist; wobei das Gehäuse (6) an dem Objektkörper befestigt ist und die Ausgangswelle (9) antreibend mit dem Rad (3) verbunden ist, um die Rotationsleistung von dem Rotor (8) über das Untersetzungsgetriebe (5) an das Fahrzeug-Rad (3) zu übertragen.

22. Radmotor nach Anspruch 21, wobei der Elektromotor (4) einen bürstenlosen Elektromotor mit einem Magnetrotor, welcher den Rotor (8) bildet, und eine Sensoreinrichtung (46) zum Abtasten einer Position des Magnetrotors (8) aufweist;
wobei mindestens ein Rad (5b,5c) mindestens einer vorbestimmten Untersetzungsstufe des Untersetzungsgetriebes (5) exzentrisch zu der Ausgangswelle (9) und einer Drehwelle (19) angeordnet ist, welche das mindestens eine Rad der mindestens einen vorbestimmten Untersetzungsstufe stützt, wobei das Unterteilungselement (6d) erste und zweite Flächen aufweist, die dem ersten bzw. zweiten Gehäuse (6B,6A) zugewandt sind, wobei das Unterteilungselement (6d) einen Befestigungsabschnitt hat, welcher integral an seiner ersten Fläche gebildet ist, an welcher die Sensoreinrichtung (46) in dem Gehäuse (6) befestigt ist, wobei das Unterteilungselement (6d) einen Stützabschnitt aufweist, welcher integral an seiner zweiten Fläche gebildet ist und die Drehwelle (19) stützt.

23. Radmotor mit einem Untersetzungsgetriebe nach Anspruch 21 oder 22, wobei die Wand (6e) mit dem zweiten Gehäuse (6A) und dem Unterteilungselement (6d) zusammenwirkt, um dazwischen einen Raum (S) mit einer hufeisenförmigen Anordnung als zweiten Raumabschnitt (S) zu begrenzen, wobei die den ersten Raumabschnitt (S') begrenzende Wand in dem zweiten Raumabschnitt (S) angeordnet ist.

24. Motor mit einem Untersetzungsgetriebe, welches aufweist:
einen Elektromotor (4) mit einem Stator (7) und einer Mehrzahl von Wicklungen (7d), die an dem Stator (7) gewickelt sind;
ein Untersetzungsgetriebe (5);
ein Gehäuse (6) mit einem ersten Gehäuse (6B), welches den Elektromotor (4) aufnimmt, einem zweiten Gehäuse (6A), welches das Untersetzungsgetriebe (5) aufweist, und einem Unterteilungselement (6d), welches zwischen dem ersten und dem zweiten Gehäuse (6B,6A) angeordnet ist und diese voneinander trennt, wobei das Unterteilungselement (6d) eine dem ersten Gehäuse (6B) zugewandte Fläche aufweist, wobei eine Einrichtung (30) vorgesehen ist, um das erste Gehäuse (6B), das Unterteilungselement (6d) und das zweite Gehäuse (6A) in einem Körper zu befestigen;
wobei das Unterteilungselement (6d) einen Befestigungsabschnitt aufweist, welcher an einer Fläche desselben gebildet ist, an welcher der Stator (7) des Elektromotors (4) an dem Gehäuse (6) befestigt ist, wobei der Befestigungsabschnitt in Richtung des ersten Gehäuses (6B) vorsteht;
mindestens ein Halbleiter-Element (45a) zum Zuführen elektrischen Stroms an die Wicklungen (7d), die an dem Stator (7) des Elektromotors (4) gewickelt sind, wobei mindestens ein Halbleiterelement (45a) jeweils eine Wärme abgebende Oberfläche hat; und
eine Befestigungseinrichtung (66), welche das mindestens eine Halbleiterelement (45a) an einer Stelle radial nach innen in dem Befestigungsabschnitt des Unterteilungselements (6d) auf eine solche Weise befestigt, daß die Wärme abgebende Fläche des mindestens einen Halbleiterelements (45a) in dichtem Kontakt mit der Fläche des Unterteilungselements (6d) steht, welches dem ersten Gehäuse (6B) zugewandt ist.

25. Motor mit einem Untersetzungsgetriebe nach Anspruch 24, mit einer Schaltungsplatte (45), welche in einem Raum angeordnet ist, welcher zwischen dem Unterteilungselement (6d) und dem Elektromotor (4) begrenzt ist und die Wicklungen (7d), die an dem Stator (7) miteinander gewickelt sind, verbindet, wobei das mindestens eine Halbleiterelement (45a) an der Schaltungsplatte (45) befestigt ist.

26. Motor mit einem Untersetzungsgetriebe nach Anspruch 25, wobei die Befestigungseinrichtung (66) eine Einrichtung beinhaltet, welche das mindestens eine Halbleiterelement (45a) zwischen der Schaltungsplatte (45) und dem Unterteilungselement (6d) sicher hält.

27. Motor mit einem Untersetzungsgetriebe nach Anspruch 25 oder 26, wobei der Elektromotor (4) einen bürstenlosen Elektromotor mit einem Magnetrotor aufweist, welcher den Rotor (8) bildet, wobei das mindestens eine Halbleiterelement (45a) an der Stelle radial nach innen in dem Befestigungsabschnitt des Unterteilungselements (6d) so angeordnet ist, daß mindestens Teil der Wärme abgebenden Fläche des mindestens einen Halbleiterelements (45a), welches in dichtem Kontakt mit der Fläche des Unterteilungselements (6d), welche dem ersten Gehäuse (6B) gegenüberliegt, gehalten ist, in einem Bereich gegenüberliegend zu dem Magnetrotor (8) des Elektromotors (4) angeordnet ist.

28. Motor mit einem Untersetzungsgetriebe nach Anspruch 27 mit einer Ausgangswelle (9), die über das Untersetzungsgetriebe (5) mit dem Rotor (8) verbunden ist, um durch diesen rotierend angetrieben zu werden, wobei das mindestens eine Halbleiterelement (45a) eine Mehrzahl von Halbleiterelementen (45a) aufweist, welche radial um die Ausgangswelle (9) des Rotors (8) angeordnet sind.

29. Radmotor, welcher an einem Objekt mit einem Objektkörper installierbar ist, und aufweist:
ein Fahrzeug-Rad (3) mit einem inneren Umfangsabschnitt, welcher darin einen zentralen Raum begrenzt; und
einen Elektromotor mit einem Untersetzungsgetriebe (5) nach Anspruch 24, wobei der Elektromotor (4) in dem zentralen Raum des Fahrzeug-Rades (3) angeordnet ist, um eine Rotationsleistung zum rotierenden Antreiben des Fahrzeug-Rades (3) zu erzeugen, wobei der Elektromotor (4) einen Rotor (8) und eine Ausgangswelle (9) aufweist, wobei der Stator (7) einen inneren Umfang hat, welcher darin einen zentralen Raum begrenzt, wobei der Rotor (8) rotierend in dem zentralen Raum des Stators (7) befestigt ist, um die Rotationsleistung während dessen Rotation zu erzeugen;
wobei das Gehäuse (6) an dem Objektkörper befestigt ist und die Ausgangswelle (9) antreibend mit dem Fahrzeug-Rad (3) verbunden ist, um die Drehleistung von dem Rotor (8) über das Untersetzungsgetriebe an das Fahrzeug-Rad (3) zu übertragen.

30. Motor mit einem Untersetzungsgetriebe, welcher aufweist:
einen Elektromotor (4) mit einem Stator (7) und einer Mehrzahl an Wicklungen (7d), welche an dem Stator (7) gewickelt sind;
ein Untersetzungsgetriebe (5);
ein Gehäuse (6), welches ein erstes Gehäuse (6B), in welchem der Elektromotor (4) untergebracht ist und eine Endfläche aufweist, ein zweites Gehäuse (6A), in welchem das Untersetzungsgetriebe (5) untergebracht ist, und ein Unterteilungselement (6d), welches zwischen dem ersten und dem zweiten Gehäuse (6B,6A) angebracht ist und diese voneinander trennt, wobei das Unterteilungselement (6d) eine Fläche aufweist, die dem ersten Gehäuse (6B) zugewandt ist, wobei eine Einrichtung (30) vorgesehen ist, um das erste Gehäuse (6B), das Unterteilungselement (6d) und das zweite Gehäuse (6A) in einem Körper zusammen zu befestigen;
elektrische Stromleitungen (69) zum Zuführen von elektrischem Strom von einer extern von dem Gehäuse (6) vorgesehenen Stromquelle;
wobei das Unterteilungselement (6d) einen Befestigungsabschnitt hat, welcher an seiner Oberfläche gebildet ist, an welchem der Stator (7) des Elektromotors (4) an dem Gehäuse (6) befestigt ist, wobei der Befestigungsabschnitt in Richtung des ersten Gehäuses (6B) vorsteht;
eine Verbindungseinrichtung, welche in einem zwischen dem Unterteilungselement (6d) und dem Elektromotor (4) begrenzten Raum angeordnet ist, um die Wicklungen (7d), die an dem Stator (7) gewickelt sind, und die elektrischen Stromleitungen (69) zu verbinden;
eine Führungsleitungs-Durchgangseinrichtung, die sich durch den Befestigungsabschnitt des Unterteilungselements (6d) und das erste Gehäuse (6B) erstreckt, wobei die Führungsleitungs-Durchgangseinrichtung die elektrischen Stromleitungen (69) durch diese hindurchführt und um zu ermöglichen, daß die elektrische Stromleitung (69) von der Endfläche des ersten Gehäuses (6B) nach außerhalb des Gehäuses (6) gezogen wird; und
eine Herausgleit-Verhinderungseinrichtung zum Verhindern, daß die elektrische Stromleitung (69) aus der Führungsleitungs-Durchgangseinrichtung herausgleitet.

31. Motor mit einem Untersetzungsgetriebe nach Anspruch 30, mit einer Schaltungsplatte (45), welche in einem zwischen dem Unterteilungselement (6d) und dem Elektromotor (4) an einer Stelle radial nach innen des Befestigungsabschnitts des Unterteilungselements (6d) begrenzten Raum angeordnet ist, wobei die Schaltungsplatte (45) die an dem Stator (7) gewickelten Wicklungen (7d) miteinander verbindet, und mindestens einem Halbleiterelement (45a), welches an der Schaltungsplatte (45) befestigt ist, um elektrischen Strom von der elektrischen Stromleitung (69) in einen Treiberstrom umzuwandeln und den Treiberstrom an die an dem Stator (7) gewickelten Wicklungen (7d) zuzuführen, wobei die Schaltungsplatte (45) und das Halbleiterelement (45a) die Verbindungseinrichtung bilden.

32. Motor mit einem Untersetzungsgetriebe nach Anspruch 31, wobei das Gehäuse (6) eine Wand (6e) beinhaltet, die integral an dem zweiten Gehäuse (6A) und/oder dem Unterteilungselement (6d) gebildet ist und einen zweiten Raumabschnitt (S) zwischen dem zweiten Gehäuse (6A) und dem Unterteilungselement (6d) begrenzt, wobei der zweite Raumabschnitt (S) von einem ersten Raumabschnitt (S') des zweiten Gehäuses (6A) getrennt ist, in welchem das Untersetzungsgetriebe (5) angeordnet ist, und wobei eine Steuerschaltung (43) in dem zweiten Raumabschnitt (S) untergebracht ist, um das mindestens eine Halbleiterelement (45a) zu steuern.

33. Motor mit einem Untersetzungsgetriebe nach Anspruch 30 oder 31, wobei der Elektromotor (4) einen bürstenlosen Elektromotor mit einem Magnetrotor, welcher den Rotor (8) bildet, aufweist, wobei das mindestens eine Halbleiterelement (45a) jeweils eine Wärme abgebende Fläche hat;
wobei der Motor (4) eine Befestigungseinrichtung beinhaltet, welche das mindestens eine Halbleiterelement (45a) an einer Stelle radial innerhalb des Befestigungsabschnitts des Unterteilungselements (6d) so befestigt, daß die Wärme abgebende Fläche des mindestens einen Halbleiterelements (45a) in dichtem Kontakt mit der Fläche des Unterteilungselements (6d) gehalten ist, welches dem ersten Gehäuse (6B) zugewandt ist, wobei die Befestigungseinrichtung eine Einrichtung beinhaltet, welche das mindestens eine Halbleiterelement (45a) sicher zwischen dem Schaltbrett (45) und dem Unterteilungselement (6d) hält;
wobei das mindestens eine Halbleiterelement (45a) an der genannten Stelle radial nach innen in dem Befestigungsabschnitt des Unterteilungselements (6d) so angeordnet ist, daß mindestens ein Teil der Wärme abgebenden Fläche des mindestens einen Halbleiterelements (45a), welches in dichtem Kontakt mit der Fläche des dem ersten Gehäuse (6B) gegenüberliegenden Unterteilungselements (6d) gehalten ist, in einem Bereich entgegengesetzt zu dem Magnetrotor (8) des Elektromotors (4) angeordnet ist.

34. Motor mit einem Untersetzungsgetriebe nach Anspruch 33 mit einer Ausgangswelle (9), die über das Untersetzungsgetriebe (5) mit dem Rotor (8) verbunden ist, um rotierend durch dieses angetrieben zu werden, wobei das mindestens eine Halbleiterelement (45a) eine Mehrzahl von Halbleiterelementen (45a) aufweist, welche radial um die Ausgangswelle (9) des Rotors (8) angeordnet sind.

35. Radmotor, welcher an einem Objekt mit einem Objektkörper installiert werden kann, und aufweist:
ein Fahrzeug-Rad (3) mit einem inneren Umfangsabschnitt, welcher darin einen zentralen Raum begrenzt; und
einen Elektromotor mit einem Untersetzungsgetriebe (5) nach Anspruch 30, wobei der Elektromotor (4) in dem zentralen Raum des Fahrzeug-Rades (3) zum Erzeugen einer Rotationsleistung zum rotierenden Antreiben des Fahrzeug-Rades (3) angeordnet ist, wobei der Elektromotor (4) einen Rotor (8) und eine Ausgangswelle (9) hat, wobei der Stator (7) einen inneren Umfang hat, welcher darin einen zentralen Raum definiert, wobei der Rotor (8) rotierend in dem zentralen Raum des Stators (7) zum Erzeugen einer Rotationsleistung während dessen Rotation angeordnet ist;
wobei das Gehäuse (6) an dem Objektkörper befestigt ist und die Ausgangswelle (9) treibend mit dem Fahrzeug-Rad (3) zum Übertragen der Rotationsleistung von dem Rotor (8) über das Untersetzungsgetriebe (5) an das Fahrzeug-Rad (3) verbunden ist.

## Revendications

1. Moteur avec engrenage réducteur, comprenant :
un moteur électrique (4) pour produire une puissance de sortie en rotation ; et un engrenage réducteur (5) ayant une pluralité d'engrenages comprenant un engrenage d'étage final (5d) ayant un trou débouchant axial qui y est formé en relation coaxiale avec un axe de rotation dudit engrenage d'étage final (5d) ; ledit moteur électrique (4) comprenant un logement (6) ayant des portions extrêmes opposées, un stator (7) fixé audit logement (6) et ayant une périphérie interne y définissant un espace central, un rotor (8) monté en rotation dans ledit espace central dudit stator (7), pour produire ladite puissance de sortie en rotation pendant sa rotation, ledit rotor (8) ayant un trou débouchant axial (8a) qui y est formé en relation coaxiale avec un axe de rotation dudit rotor (8), un arbre de sortie (9) raccordé par le biais dudit engrenage réducteur (5) au rotor (8) de façon à être entraîné en rotation pour produire ladite puissance de sortie en rotation depuis ledit rotor (8) à travers ledit engrenage réducteur (5) ; ledit logement (6) comprenant un premier boîtier (6B) ayant une portion extrême formant une des dites portions extrêmes opposées dudit logement (6) et logeant ledit moteur électrique (4), un deuxième boîtier (6A) ayant une portion extrême formant l'autre desdites portions extrêmes opposées dudit logement (6) et logeant ledit engrenage réducteur (5), et un élément de séparation (6d) interposé entre lesdits premier et deuxième boîtiers (6B, 6A) et les séparant l'un de l'autre, ledit élément de séparation (6d) ayant un trou débouchant axial (6f) et une portion de montage (6d') par laquelle ledit stator (7) dudit moteur électrique (4) est fixé audit logement (6), dans lequel des moyens (30) sont prévus pour fixer ensemble ledit premier boîtier (6B), ledit élément de séparation (6d) et ledit deuxième boîtier (6A) en un corps ;
ledit arbre de sortie (9) étant monté de façon rigide dans, et s'étendant à travers, ledit trou débouchant axial dudit engrenage d'étage final (5d) dudit engrenage réducteur (5), ledit trou débouchant axial dudit élément de séparation (6d) et ledit trou débouchant axial dudit rotor (8), ledit arbre de sortie (9) étant supporté en rotation par ladite portion extrême dudit premier boîtier (6B) et ladite portion extrême dudit deuxième boîtier (6A) d'une façon qui est hors de contact avec ledit trou débouchant axial dudit rotor (8).

2. Moteur avec engrenage réducteur selon la revendication 1, comprenant des moyens de palier (13a, 13b) supportant en rotation ledit rotor (8) sur ledit arbre de sortie (9).

3. Moteur avec engrenage réducteur selon la revendication 1, dans lequel ledit moteur électrique (4) comprend un moteur électrique sans balais ayant un rotor magnétique formant ledit rotor, et des moyens formant capteur (46) pour détecter une position dudit rotor magnétique ;
ledit engrenage réducteur (5) ayant au moins un engrenage (5b, 5c) d'au moins un étage de réduction prédéterminé disposé de façon excentrique par rapport audit arbre de sortie (9), et un arbre rotatif (19) supportant ledit au moins un engrenage, dudit au moins un étage de réduction prédéterminé ;
ledit élément de séparation (6d) ayant des première et deuxième surfaces faisant face aux dits premier et deuxième boîtiers (6B, 6A) respectivement, et ayant une première portion de montage formée d'une seule pièce sur sa dite première surface, ladite première portion de montage formant ladite portion de montage dudit stator (7) dudit moteur électrique (4), et une deuxième portion de montage formée d'une seule pièce sur sa dite première surface, par laquelle lesdits moyens formant capteur (46) sont montés dans ledit logement (6), ledit élément de séparation (6d) ayant une portion de support formée d'une seule pièce sur sa dite deuxième surface et supportant ledit arbre rotatif (19).

4. Moteur avec engrenage réducteur selon la revendication 3, comprenant une paroi (6e) formée d'une seule pièce sur au moins un dudit deuxième boîtier (6A) et dudit élément de séparation (6d) et définissant une deuxième portion d'espace (S) entre ledit deuxième boîtier (6A) et ledit élément de séparation (6d), ledit espace (S) étant séparé d'une première portion d'espace (S') dudit deuxième boîtier (6A) dans laquelle ledit engrenage réducteur (5) est agencé, et un circuit de commande logé dans ladite deuxième portion d'espace (S), pour entraîner ledit moteur électrique (4).

5. Moteur avec engrenage réducteur selon la revendication 4, où ladite deuxième portion d'espace (S) a une configuration en forme de fer à cheval, et ledit premier espace (S') loge ledit arbre de sortie (9) ainsi que ledit engrenage réducteur (5).

6. Moteur de roue pouvant être installé sur un objet ayant un corps d'objet, comprenant :
une roue (3) ayant une portion périphérique interne y définissant un espace central ;
et
un moteur électrique avec un engrenage réducteur (5) selon la revendication 1, le moteur électrique (4) étant agencé dans ledit espace central de ladite roue (3), pour produire une puissance de sortie en rotation pour entraîner en rotation ladite roue et l'engrenage réducteur (5) étant agencé dans ledit espace central de ladite roue ;
dans lequel ledit logement (6) est fixé audit corps d'objet et ledit arbre de sortie (9) est raccordé en entraînement à ladite roue (3) pour transmettre ladite puissance de sortie en rotation depuis ledit rotor (8) à ladite roue (3) par le biais dudit engrenage réducteur (5).

7. Moteur avec engrenage réducteur, comprenant :
un moteur électrique (4) pour produire une puissance de sortie en rotation ;
un engrenage réducteur (5) ;
ledit moteur électrique (4) comprenant un logement (6), un stator (7) fixé audit logement (6) et ayant une périphérie interne y définissant un espace central, un rotor (8) monté en rotation dans ledit espace central dudit stator (7), pour produire ladite puissance de sortie en rotation pendant sa rotation, et un arbre de sortie (9) raccordé, par le biais dudit engrenage réducteur (5), audit rotor (8) de façon à être entraîné en rotation, pour produire ladite puissance de sortie en rotation depuis ledit rotor (8) par le biais dudit engrenage réducteur (5) ; et
un circuit électrique (43) agencé dans ledit logement (6) en même temps que ledit moteur électrique (4), pour entraîner ledit moteur électrique (4) ;
dans lequel ledit engrenage réducteur (5) comprend un engrenage d'étage final (5d) ayant un trou débouchant axial qui y est formé en relation coaxiale avec un axe de rotation dudit engrenage d'étage final (5d), et au moins un moyen d'engrenage de réduction (5b, 5c), interposé entre ledit rotor (8) et ledit engrenage d'étage final (5d) et disposé de façon excentrique par rapport audit arbre de sortie (9) ;
ledit logement (6) comprenant un premier boîtier (6B) logeant ledit moteur électrique (4), un deuxième boîtier (6A) logeant ledit engrenage réducteur (5), et un élément de séparation (6d) interposé entre lesdits premier et deuxième boîtiers (6B, 6A) et les séparant l'un de l'autre, et y définissant un espace de réception ayant une forme de cercle concentrique par rapport audit arbre de sortie (9), ledit espace de réception comprenant une première portion d'espace (S') logeant ledit arbre de sortie (9) dudit moteur électrique (4) et ledit au moins moyen d'engrenage de réduction (5b, 5c), dudit engrenage réducteur (5), et une deuxième portion d'espace (S) logeant ledit circuit électrique (43), dans lequel des moyens (30) sont prévus pour fixer ensemble ledit premier boîtier (6B), ledit élément de séparation (6d) et ledit deuxième boîtier (6A) en un corps.

8. Moteur avec engrenage réducteur selon la revendication 7, dans lequel ledit arbre de sortie (9) s'étend à travers ledit élément de séparation (6d) et est fixé de façon rigide dans, et s'étend à travers, ledit trou débouchant axial dudit engrenage d'étage final (5d) dudit engrenage réducteur (5), ledit arbre de sortie (9) étant supporté en rotation par ledit premier boîtier (6B) et ledit deuxième boîtier (6A).

9. Moteur avec engrenage réducteur selon la revendication 7, dans lequel ledit logement (6) comprend une paroi (6e) formée d'une seule pièce sur au moins un dudit deuxième boîtier (6A) et dudit élément de séparation (6d) et définit ladite deuxième portion d'espace (S) entre ledit deuxième boîtier (6A) et ledit élément de séparation (6d), ladite deuxième portion d'espace (S) étant séparée de ladite première portion d'espace (S') logeant ledit au moins un moyen d'engrenage de réduction, ledit circuit électrique comprenant un circuit d'entraînement (45) pour entraîner ledit moteur électrique (4), et un circuit de commande (43) pour commander ledit circuit d'entraînement, au moins ledit circuit de commande (43) étant agencé dans ladite deuxième portion d'espace (S).

10. Moteur avec engrenage réducteur selon la revendication 9, dans lequel ledit moteur électrique (4) comprend un moteur électrique sans balais ayant un rotor magnétique formant ledit rotor (8), et des moyens formant capteur (46) pour détecter une position dudit rotor magnétique (8);
ledit engrenage réducteur (5) ayant au moins un engrenage (5b, 5c) d'au moins un étage de réduction prédéterminé disposé de façon excentrique par rapport audit arbre de sortie (9), et un arbre rotatif (19) supportant ledit au moins un engrenage dudit au moins un étage de réduction prédéterminé, ledit élément de séparation (6d) ayant des première et deuxième surfaces faisant face aux dits premier et deuxième boîtiers (6B, 6A) respectivement, ledit élément de séparation (6d) ayant une portion de montage formée d'une seule pièce sur sa dite première surface, par laquelle lesdits moyens formant capteur (46) sont montés dans ledit logement (6), ledit élément de séparation (6d) ayant une portion de support formée d'une seule pièce sur sa dite deuxième surface et supportant ledit arbre rotatif (19).

11. Moteur avec engrenage réducteur selon la revendication 9 ou 10, dans lequel ladite paroi (6e) coopère avec ledit deuxième boîtier (6A) et ledit élément de séparation (6d) pour définir entre eux un espace ayant une configuration en forme de fer à cheval en tant que dite deuxième portion d'espace (S), ladite paroi définissant une portion d'espace située à l'intérieur de ladite deuxième portion d'espace (S) en tant que dite première portion d'espace (S').

12. Moteur avec engrenage réducteur, comprenant :
un moteur électrique (4) pour produire une puissance de sortie en rotation, ledit moteur électrique (4) ayant un arbre de sortie (9) et un logement (6);
un engrenage réducteur (5) ;
ledit arbre de sortie (9) étant raccordé audit engrenage réducteur (5), pour produire une puissance de sortie en rotation depuis ledit moteur électrique (4), transmise à travers ledit engrenage réducteur (5) ;
ledit logement (6) comprenant un premier boîtier (6B) logeant ledit moteur électrique (4), un deuxième boîtier (6A) logeant ledit engrenage réducteur (5), et un élément de séparation (6d) interposé entre lesdits premier et deuxième boîtiers (6B, 6A) et les séparant l'un de l'autre, dans lequel des moyens (30) sont prévus pour fixer ensemble ledit premier boîtier (6B), ledit élément de séparation (6d) et ledit deuxième boîtier (6A) en un corps ; ledit arbre de sortie (9) dudit moteur électrique (4) s'étendant à travers ledit élément de séparation (6d) et étant supporté en rotation par lesdits premier et deuxième boîtiers (6B, 6A) ;
ledit logement (6) comprenant une paroi (6e) formée d'une seule pièce sur au moins un dudit deuxième boîtier (6A) et dudit élément de séparation (6d) et définissant une deuxième portion d'espace (S) entre ledit deuxième boîtier (6A) et ledit élément de séparation (6d), ladite deuxième portion d'espace (S) étant séparée d'une première portion d'espace (S') dudit deuxième boîtier (6A) dans laquelle est agencé ledit engrenage réducteur (5) ; et
un circuit électrique comprenant un circuit d'entraînement (45) pour entraîner ledit moteur électrique (4), et un circuit de commande (43) pour commander ledit circuit d'entraînement, au moins ledit circuit de commande dudit circuit électrique étant agencé dans ladite deuxième portion d'espace (S).

13. Moteur avec engrenage réducteur selon la revendication 12, dans lequel ledit moteur électrique (4) comprend moteur électrique sans balais ayant un rotor magnétique formant ledit rotor (8), et des moyens formant capteur (46) pour détecter une position dudit rotor magnétique(8) ;
ledit engrenage réducteur (5) ayant au moins un engrenage (5b, 5c) d'au moins un étage de réduction prédéterminé disposé de façon excentrique par rapport audit arbre de sortie (9), et un arbre rotatif (19) supportant ledit au moins un engrenage dudit au moins un étage de réduction prédéterminé, ledit élément de séparation (6d) ayant des première et deuxième surfaces faisant face aux dits premier et deuxième boîtiers (6B, 6A) respectivement, ledit élément de séparation (6d) ayant une portion de montage formée d'une seule pièce sur sa dite première surface, par laquelle desdits moyens formant capteur (46) sont montés dans ledit logement (6), ledit élément de séparation (6d) ayant une portion de support formée d'une seule pièce sur sa dite deuxième surface et supportant ledit arbre rotatif (19).

14. Moteur avec engrenage réducteur selon la revendication 12 ou 13, dans lequel ladite paroi (6e) coopère avec ledit deuxième boîtier (6A) et ledit élément de séparation (6d) pour définir entre eux un espace ayant une configuration en forme de fer à cheval en tant que dite deuxième portion d'espace (S) et ladite première portion d'espace (S') située à l'intérieur de ladite deuxième portion d'espace, ladite deuxième portion d'espace (S) logeant ledit circuit de commande (43), ladite première portion d'espace logeant ledit arbre de sortie (9) et ledit engrenage réducteur (5).

15. Moteur de roue pouvant être installé sur un objet ayant un corps d'objet, comprenant :
une roue (3) ayant une portion périphérique interne y définissant un espace central; et
un moteur électrique avec un engrenage réducteur (5) selon la revendication 7, le moteur électrique (4) étant agencé dans ledit espace central de ladite roue (3), pour produire une puissance de sortie en rotation pour entraîner en rotation ladite roue et l'engrenage réducteur (5) étant agencé dans ledit espace central de ladite roue ;
dans lequel ledit logement (6) est fixé audit corps d'objet et ledit arbre de sortie (9) est raccordé en entraînement à ladite roue (3) pour transmettre ladite puissance de sortie en rotation depuis ledit rotor (8) à ladite roue (3) par le biais dudit engrenage réducteur (5).

16. Moteur de roue selon la revendication 15, dans lequel ledit engrenage réducteur (5) comprend un engrenage d'étage final (5d) ayant un trou débouchant axial qui y est formé en relation coaxiale avec un axe de rotation dudit engrenage d'étage final (5d), et au moins un moyen d'engrenage de réduction (5b, 5c), interposé entre ledit rotor (8) et ledit engrenage d'étage final (5d) et disposé de façon excentrique par rapport audit arbre de sortie (9), ledit au moins un moyen d'engrenage de réduction, dudit engrenage réducteur (5) étant agencé dans ladite deuxième portion d'espace (S').

17. Moteur de roue selon la revendication 16, dans lequel ledit arbre de sortie (9) s'étend à travers ledit élément de séparation (6d) et est monté de façon rigide dans, et s'étend à travers, ledit trou débouchant axial dudit engrenage d'étage final (5d) dudit engrenage réducteur (5), ledit arbre de sortie (9) étant supporté en rotation par ledit premier boîtier (6B) et ledit deuxième boîtier (6A).

18. Moteur de roue selon la revendication 15, dans lequel ledit arbre de sortie (9) s'étend à travers ledit élément de séparation (6d) et est supporté en rotation par ledit premier boîtier (6B) et ledit deuxième boîtier (6A) ;
ledit logement (6) comprenant une paroi (6e) formée d'une seule pièce sur au moins un dudit deuxième boîtier (6A) et dudit élément de séparation (6d) et définissant ladite deuxième portion d'espace (S) entre ledit deuxième boîtier (6A) et ledit élément de séparation (6d), ladite deuxième portion d'espace (S) étant séparée de ladite première portion d'espace (S') logeant ledit engrenage réducteur (5) ;
ledit circuit électrique comprenant un circuit d'entraînement (45) pour entraîner ledit moteur électrique (4), et un circuit de commande (43) pour commander ledit circuit d'entraînement, au moins ledit circuit de commande (43) étant agencé dans ladite deuxième portion d'espace (S).

19. Moteur de roue selon la revendication 18, dans lequel ledit moteur électrique (4) comprend un moteur électrique sans balais ayant un rotor magnétique formant ledit rotor (8), et des moyens formant capteur (46) pour détecter une position dudit rotor magnétique (8) ;
ledit engrenage réducteur (5) ayant au moins un engrenage (5b, 5c) d'au moins un étage de réduction prédéterminé disposé de façon excentrique par rapport audit arbre de sortie (9), et un arbre rotatif (19) supportant ledit au moins un engrenage, dudit au moins un étage de réduction prédéterminé, ledit élément de séparation (6d) ayant des première et deuxième surfaces faisant face aux dits premier et deuxième boîtiers (6B, 6A) respectivement, ledit élément de séparation (6d) ayant une portion de montage formée d'une seule pièce sur sa dite première surface, par laquelle lesdits moyens formant capteur (46) sont montés dans ledit logement (6), ledit élément de séparation (6d) ayant une portion de support formée d'une seule pièce sur sa dite deuxième surface et supportant ledit arbre rotatif (19).

20. Moteur de roue avec un engrenage réducteur selon la revendication 18 ou 19, dans lequel ladite paroi (6e) coopère avec ledit deuxième boîtier (6A) et ledit élément de séparation (6d) pour définir entre eux un espace (S) ayant une configuration en forme de fer à cheval en tant que dite deuxième portion d'espace (S), ladite paroi définissant ladite première portion d'espace (S') située à l'intérieur de ladite deuxième portion d'espace (S).

21. Moteur de roue pouvant être installé sur un objet ayant un corps d'objet, comprenant :
une roue (3) ayant une portion périphérique interne y définissant un espace central ;
et
un moteur électrique avec un engrenage réducteur (5) selon la revendication 12, le moteur électrique (4) étant agencé dans ledit espace central de ladite roue (3) pour produire une puissance de sortie en rotation pour entraîner en rotation ladite roue et l'engrenage réducteur (5) étant agencé dans ledit espace central de ladite roue ;
dans lequel ledit logement (6) est fixé audit corps d'objet et ledit arbre de sortie (9) est raccordé en entraînement à ladite roue (3) pour transmettre ladite puissance de sortie en rotation depuis ledit rotor (8) à ladite roue (3) par le biais dudit engrenage réducteur (5).

22. Moteur de roue selon la revendication 21, dans lequel ledit moteur électrique (4) comprend un moteur électrique sans balais ayant un rotor magnétique formant ledit rotor (8), et des moyens formant capteur (46) pour détecter une position dudit rotor magnétique (8) ;
ledit engrenage réducteur (5) ayant au moins un engrenage (5b, 5c) d'au moins un étage de réduction prédéterminé disposé de façon excentrique par rapport audit arbre de sortie (9), et un arbre rotatif (19) supportant ledit au moins un engrenage, dudit au moins un étage de réduction prédéterminé, ledit élément de séparation (6d) ayant des première et deuxième surfaces faisant face aux dits premier et deuxième boîtiers (6B, 6A) respectivement, ledit élément de séparation (6d) ayant une portion de montage formée d'une seule pièce sur sa dite première surface, par laquelle lesdits moyens formant capteur (46) sont montés dans ledit logement (6), ledit élément de séparation (6d) ayant une portion de support formée d'une seule pièce sur sa dite deuxième surface et supportant ledit arbre rotatif (19).

23. Moteur de roue avec engrenage réducteur selon la revendication 21 ou 22, dans lequel ladite paroi (6e) coopère avec ledit deuxième boîtier (6A) et ledit élément de séparation (6d) pour définir entre eux un espace (S) ayant une configuration en forme de fer à cheval en tant que dite deuxième portion d'espace (S), ladite paroi définissant ladite première portion d'espace (S') située à l'intérieur de ladite deuxième portion d'espace (S).

24. Moteur avec engrenage réducteur, comprenant :
un moteur électrique (4) ayant un stator (7), et une pluralité d'enroulements (7d) enroulés sur ledit stator (7) ;
un engrenage réducteur (5) ;
un logement (6) comprenant un premier boîtier (6B) logeant ledit moteur électrique (4), un deuxième boîtier (6A) logeant ledit engrenage réducteur (5), et un élément de séparation (6d) interposé entre lesdits premier et deuxième boîtiers (6B, 6A) et les séparant l'un de l'autre, ledit élément de séparation (6d) ayant une surface faisant face audit premier boîtier (6B), dans lequel des moyens (30) sont prévus pour fixer ensemble ledit premier boîtier (6B), ledit élément de séparation (6d) et ledit deuxième boîtier (6A) en un corps ;
ledit élément de séparation (6d) ayant une portion de montage formée sur sa dite surface, par laquelle ledit stator (7) dudit moteur électrique (4) est fixé audit logement (6), ladite portion de montage étant projetée vers ledit premier boîtier (6B) ;
au moins un élément à semi-conducteur (45a) pour fournir la puissance électrique aux dits enroulements (7d) enroulés sur ledit stator (7) dudit moteur électrique (4), ledit au moins un élément à semi-conducteur (45a) ayant chacun une surface rayonnant la chaleur ; et
des moyens de montage (66) montant ledit au moins un élément à semi-conducteur (45a) dans un emplacement situé à l'intérieur, dans le sens radial, de ladite portion de montage dudit élément de séparation (6d) d'une façon telle que ladite surface rayonnant la chaleur dudit au moins un élément à semi-conducteur (45a), est maintenue en contact étroit avec ladite surface dudit élément de séparation (6d) faisant face audit premier boîtier (6B).

25. Moteur avec engrenage réducteur selon la revendication 24, comprenant une carte de circuit imprimé (45) agencée dans un espace défini entre ledit élément de séparation (6d) et ledit moteur électrique (4) et connectant les uns aux autres lesdits enroulements (7d) enroulés sur ledit stator (7), ledit au moins un élément à semi-conducteur (45a) étant monté sur ladite carte de circuit imprimé (45).

26. Moteur avec engrenage réducteur selon la revendication 25, dans lequel lesdits moyens de montage (66) comprennent des moyens retenant solidement ledit au moins un élément à semi-conducteur (45a) entre ladite carte de circuit imprimé (45) et ledit élément de séparation (6d).

27. Moteur avec engrenage réducteur selon la revendication 25 ou 26, dans lequel ledit moteur électrique (4) comprend un moteur électrique sans balais ayant un rotor magnétique formant ledit rotor (8), ledit au moins un élément à semi-conducteur (45a) étant agencé audit endroit à l'intérieur, dans le sens radial, de ladite portion de montage dudit élément de séparation (6d) d'une telle façon qu'au moins une partie de ladite surface rayonnant la chaleur dudit au moins un élément à semi-conducteur (45a), maintenue en contact étroit avec ladite surface dudit élément de séparation (6d) faisant face audit premier boîtier (6B), est située à l'intérieur d'une région opposée audit rotor (8) dudit moteur électrique (4).

28. Moteur avec engrenage réducteur selon la revendication 27, comprenant un arbre de sortie (9) raccordé, par le biais dudit engrenage réducteur (5), audit rotor (8) de façon à être entraîné en rotation, ledit au moins un élément à semi-conducteur (45a) comprenant une pluralité d'éléments à semi-conducteur (45a) agencés radialement autour dudit arbre de sortie (9) dudit rotor (8).

29. Moteur de roue pouvant être installé sur un objet ayant un corps d'objet, comprenant :
une roue (3) ayant une portion périphérique interne y définissant un espace central ;
et
un moteur électrique avec un engrenage réducteur (5) selon la revendication 24, le moteur électrique (4) étant agencé dans ledit espace central de ladite roue (3), pour produire une puissance de sortie en rotation pour entraîner en rotation ladite roue (3), le moteur électrique (4) ayant un rotor (8) et un arbre de sortie (9), ledit stator (7) ayant une périphérie interne y définissant un espace central, ledit rotor (8) étant monté en rotation dans ledit espace central dudit stator (7) pour produire ladite puissance de sortie en rotation pendant sa rotation ;
dans lequel ledit logement (6) est fixé audit corps d'objet et ledit arbre de sortie (9) est raccordé en entraînement à ladite roue (3) pour transmettre ladite puissance de sortie en rotation depuis ledit rotor (8) à ladite roue (3) par le biais dudit engrenage réducteur (5).

30. Moteur avec engrenage réducteur, comprenant :
un moteur électrique (4) ayant un stator (7) et une pluralité d'enroulements (7d) enroulés sur ledit stator (7) ;
un engrenage réducteur (5) ;
un logement (6) comprenant un premier boîtier (6B) logeant ledit moteur électrique (4) et ayant une surface extrême, un deuxième boîtier (6A) logeant ledit engrenage réducteur (5), et un élément de séparation (6d) interposé entre lesdits premier et deuxième boîtiers (6B, 6A) et les séparant l'un de l'autre, ledit élément de séparation (6d) ayant une surface faisant face audit premier boîtier (6B), dans lequel des moyens sont prévus pour fixer ensemble ledit premier boîtier (6B), ledit élément de séparation (6d) et ledit deuxième boîtier (6A) en un corps ;
des lignes d'alimentation électriques (69) pour fournir l'alimentation électrique à partir d'une source électrique disposée à l'extérieur dudit logement (6) ;
ledit élément de séparation (6d) ayant une portion de montage formée sur sa dite surface, par laquelle ledit stator (7) dudit moteur électrique (4) est fixé audit logement (6), ladite portion de montage étant projetée vers ledit premier boîtier (6B) ;
des moyens de raccordement agencés à l'intérieur d'un espace défini entre ledit élément de séparation (6d) et ledit moteur électrique (4) pour le raccordement entre lesdits enroulements (7d) enroulés sur ledit stator (7) et lesdites lignes d'alimentation électriques (69) ;
des moyens de passage de lignes conductrices s'étendant à travers ladite portion de montage dudit élément de séparation (6d) et ledit premier boîtier (6B), lesdits moyens de passage de lignes conductrices y faisant passer lesdites lignes d'alimentation électriques (69) et pour permettre à ladite ligne d'alimentation électrique (69) d'être tirée depuis ladite surface extrême dudit premier boîtier (6B) vers l'extérieur dudit logement (6) ; et
des moyens anti-glissement pour empêcher ladite ligne d'alimentation électrique (69) de glisser hors desdits moyens de passage de lignes conductrices.

31. Moteur avec engrenage réducteur selon la revendication 30, comprenant une carte de circuit imprimé (45) agencée dans un espace défini entre ledit élément de séparation (6d) et ledit moteur électrique (4) dans un endroit à l'intérieur, dans le sens radial, de ladite portion de montage dudit élément de séparation (6d), ladite carte de circuit imprimé (45) raccordant les uns aux autres lesdits enroulements (7d) enroulés sur chaque stator (7), et au moins un élément à semi-conducteur (45a) monté sur ladite carte de circuit imprimé (45) pour convertir l'alimentation électrique provenant de la ligne d'alimentation électrique (69) en courant d'entraînement et fournir ledit courant d'entraînement aux dits enroulements (7d) enroulés sur ledit stator (7), ladite carte de circuit imprimé (45) et ledit élément à semi-conducteur (45a) formant lesdits moyens de raccordement.

32. Moteur avec engrenage réducteur selon la revendication 31, ledit logement (6) comprenant une paroi (6e) formée d'une seule pièce sur au moins un dudit deuxième boîtier (6A) et dudit élément de séparation (6d) et définissant une deuxième portion d'espace (S) entre ledit deuxième boîtier (6A) et ledit élément de séparation (6d), ladite deuxième portion d'espace (S) étant séparée d'une première portion d'espace (S') dudit deuxième boîtier (6A) dans laquelle est agencé ledit engrenage réducteur (5), et un circuit de commande (43) logé à l'intérieur de ladite deuxième portion d'espace (S), pour commander ledit au moins un élément à semi-conducteur (45a).

33. Moteur avec engrenage réducteur selon la revendication 30 ou 31, dans lequel ledit moteur électrique (4) comprend un moteur électrique sans balais ayant un rotor magnétique formant ledit rotor (8), ledit au moins un élément à semi-conducteur (45a) ayant chacun une surface rayonnant la chaleur ; ledit moteur (4) comprenant des moyens de montage montant ledit au moins un élément à semi-conducteur (45a) dans un emplacement situé à l'intérieur, dans le sens radial, de ladite portion de montage dudit élément de séparation (6d) d'une façon telle que ladite surface rayonnant la chaleur dudit au moins un élément à semi-conducteur (45a), est maintenue en contact étroit avec ladite surface dudit élément de séparation (6d) faisant face audit premier boîtier (6B), lesdits moyens de montage comprenant des moyens retenant solidement ledit au moins un élément à semi-conducteur (45a) entre ladite carte de circuit imprimé (45) et ledit élément de séparation (6d) ;
ledit au moins un élément à semi-conducteur (45a) étant agencé audit endroit à l'intérieur, dans le sens radial, de ladite portion de montage dudit élément de séparation (6d) d'une manière telle qu'au moins une partie de ladite surface rayonnant la chaleur dudit au moins un élément à semi-conducteur (45a), retenue en contact étroit avec ladite surface dudit élément de séparation (6d) faisant face audit premier boîtier (6B), est située à l'intérieur d'une région opposée audit rotor magnétique (8) dudit moteur électrique (4).

34. Moteur avec engrenage réducteur selon la revendication 33, comprenant un arbre de sortie (9) raccordé, par le biais dudit engrenage réducteur (5), audit rotor (8) de façon à être entraîné en rotation, ledit au moins un élément à semi-conducteur (45a) comprenant une pluralité d'éléments à semi-conducteur (45a) agencés radialement autour dudit arbre de sortie (9) dudit rotor (8).

35. Moteur de roue pouvant être installé sur un objet ayant un corps d'objet, comprenant :
une roue (3) ayant une portion périphérique interne y définissant un espace central ;
et
un moteur électrique avec un engrenage réducteur (5) selon la revendication 30, le moteur électrique (4) étant agencé dans ledit espace central de ladite roue (3), pour produire une puissance de sortie en rotation pour entraîner en rotation ladite roue (3), le moteur électrique (4) ayant un rotor (8) et un arbre de sortie (9), ledit stator (7) ayant une périphérie interne y définissant un espace central, ledit rotor (8) étant monté en rotation dans ledit espace central dudit stator (7) pour produire ladite puissance de sortie en rotation pendant sa rotation ;
dans ledit logement (6) est fixé audit corps d'objet et ledit arbre de sortie (9) est raccordé en entraînement à ladite roue (3) pour transmettre ladite puissance de sortie en rotation depuis ledit rotor (8) à ladite roue (3) par le biais dudit engrenage réducteur (5).
